# EUROPÄISCHE PATENTANMELDUNG

(11) **EP 4 502 948 A2**
(43) Veröffentlichungstag der Anmeldung: **05.02.2025**
(21) Anmeldenummer: 24221819.6
(22) Anmeldetag: 25.11.2021
(51) Int. Cl.: G06T 7/70

(54) **ERZEUGEN EINER PANORAMAKARTE ZUR ERFASSUNG EINER SZENE MIT MEHREREN KAMERAS**

(30) Priorität: 27.11.2020 DE 102020131576
(62) Teilanmeldung aus: 21210579.5
(71) Anmelder: Sporttotal Technology GmbH, 50829 Köln (DE)
(72) Erfinder: SCHLEICHER, Marco, 83043 Bad Aibling (DE); DÜRR, Tobias, 53501 Grafschaft (DE); LANGE, Frederik, 90408 Nürnberg (DE); SINGH, Maximilian, 90411 Nürnberg (DE)
(74) Vertreter: Richly & Ritschel Patentanwälte PartG mbB

(57) **Zusammenfassung**

Im Detail wird ein Verfahren offenbart zur Erzeugung einer Panoramakarte (18) zur Erfassung einer Szene (3) basierend auf einer Mehrzahl individueller Kameras (2A, 2B, 2C, 2D) angegeben, wobei jede der Kameras (2A, 2B, 2C, 2D) mit ihrem Sichtfeld (4A, 4B, 4C, 4D) zumindest einen Teilbereich (5A, 5B, 5C, 5D) der Szene (3) erfasst und die Kameras (2A, 2B, 2C, 2D) die Szene (3) mit ihren Sichtfeldern (4A, 4B, 4C, 4D) in Kombination vollständig erfassen, umfassend die Schritte
- Extrahieren von wenigstens einem Einzelbild (20A, 20B, 20C, 20D) von jeder der Kameras (2A, 2B, 2C, 2D),
- Ermitteln einer Ausrichtung der Kameras (2A, 2B, 2C, 2D) basierend auf dem wenigstens einen Einzelbild (20A, 20B, 20C, 20D) von jeder der Kameras (2A, 2B, 2C, 2D), und
- Erzeugen der Panoramakarte (18) der Szene (3) als Matrix von Kartenelementen (27) mit einer Abbildungsvorschrift der Kartenelemente (27) auf Bildkoordinaten (26) der Kameras (2A, 2B, 2C, 2D) basierend auf der ermittelten Ausrichtung der Kameras (2A, 2B, 2C, 2D), wobei
- das Erzeugen der Panoramakarte (18) der Szene (3) als Matrix von Kartenelementen (27) mit einer Abbildungsvorschrift der Kartenelemente (27) auf Bildkoordinaten (26) der Kameras (2A, 2B, 2C, 2D) basierend auf der ermittelten Ausrichtung der Kameras (2A, 2B, 2C, 2D) innerhalb wenigstens eines Kombinationsbereichs (28) eines Überlappungsbereichs (22) der Sichtfelder (4A, 4B, 4C, 4D) von einer Mehrzahl der Kameras (2A, 2B, 2C, 2D) ein Erzeugen der Abbildungsvorschrift der Kartenelemente (27) auf mit dem Kombinationsbereich (28) korrespondierende Bildkoordinaten (26) von der Mehrzahl der Kameras (2A, 2B, 2C, 2D) umfasst.

## Beschreibung

Die vorliegende Erfindung betrifft ein Verfahren zur Erzeugung einer Panoramakarte zur Erfassung einer Szene basierend auf einer Mehrzahl individueller Kameras, wobei jede der Kameras mit ihrem Sichtfeld zumindest einen Teilbereich der Szene erfasst und die Kameras die Szene mit ihren Sichtfeldern in Kombination vollständig erfassen.

Die vorliegende Erfindung betrifft zusätzlich ein Kamerasystem zur Erfassung einer Szene mit einer Mehrzahl individueller Kameras, wobei jede der Kameras mit ihrem Sichtfeld zumindest einen Teilbereich der Szene erfasst und die Kameras die Szene mit ihren Sichtfeldern in Kombination vollständig erfassen.

Aus dem Stand der Technik ist beispielsweise bekannt, Bilder von gemeinsam angeordneten Kameras zur gemeinsamen Erfassung einer Szene derart zu kombinieren, dass sich aus den einzelnen Bildern eine Panoramadarstellung der Szene ergibt. Dabei können die Bilder der einzelnen Kameras auf verschiedene Weisen verarbeitet werden, um die Panoramadarstellung zu erzeugen. Auch die Kombination der Bilder der einzelnen Kameras zu der Panoramadarstellung stellt eine zusätzliche Verarbeitung dar, insbesondere wenn Bildinhalte der Bilder von mehreren Kameras kombiniert werden. Bei der Verarbeitung der Bilder der einzelnen Kameras zur Erzeugung der Panoramadarstellung werden üblicherweise Interpolationen von Bildpunkten durchgeführt, um Bildpunkte für eine jeweils nachgeschaltete Verarbeitungsstufe bereitzustellen. Dabei wird ein Bildpunkt für eine neue Abbildung basierend auf eine Kombination mehrerer Bildpunkte erzeugt, beispielsweise basierend auf einer Kombination von Bildpunkten von einer oder mehrerer der Kameras. Dabei sind verschiedene Verfahren zur Interpolation von Bildpunkten bekannt. Typischerweise geht mit der Interpolation von Bildpunkten ein Qualitätsverlust für die so erstellte Abbildung einher.

Darüber hinaus ist es bekannt, aus einem solchen Panoramadarstellung einen Bildbereich auszuwählen und nach der Art einer virtuellen Kamera bereitzustellen. Dabei wird in dem entsprechenden Bildbereich ausgehend von Bildpunkten der Panoramadarstellung ein Bild der virtuellen Kamera erzeugt, d.h. die durch Bildverarbeitung entstandenen Bildpunkte der Panoramadarstellung werden weiter verarbeitet, um das Bild der virtuellen Kamera bereitzustellen. Auch dabei wird üblicherweise eine Interpolation durchgeführt, wobei Bildpunkte des Bildes der virtuellen Kamera aus den Bildpunkten der Panoramadarstellung interpoliert werden. Dadurch können beispielsweise die Bilder der virtuellen Kamera mit einer gewünschten Auflösung bereitgestellt werden.

Die Bilder der virtuellen Kamera, der einzelnen Kameras sowie die Panoramadarstellung können dabei Einzelbilder sein. Üblicherweise handelt es sich dabei um Bewegtbilder, auch als Videobild oder Videostream bezeichnet, wobei die Bewegtbilder basierend auf einer Abfolge von Einzelbildern dargestellt werden. Dabei ist es unabhängig, wie die Einzelbilder kombiniert werden, beispielsweise welches Verfahren zur Videokodierung verwendet wird. Es kann jedes der Einzelbilder als Teil des Videostreams übertragen werden, und/oder es werden Unterschiede zwischen Einzelbildern übertragen, um daraus und basierend auf einem anderen Einzelbild ein neues Einzelbild zu bestimmen und so das Videobild zu erzeugen.

Jede Verarbeitung der Bildpunkte bedingt dabei eine Reduktion der Bildqualität. Dies betrifft sowohl die Verarbeitung der Bildpunkte der Kameras zur Bereitstellung der Panoramadarstellung wie auch die Verarbeitung der Bildpunkte der Panoramadarstellung zur Bereitstellung des Bildes der virtuellen Kamera.

Die Offenbarung von Christoph Fehn et al. in dem Artikel "Creation of High-Resolution Video Panoramas of Sport Events" (PROCEEDINGS/ISM 2006, EIGHTH IEEE INTERNATIONAL SYMPOSIUM ON MULTIMEDIA 11 13 DECEMBER 2006, SAN DIEGO, CA, IEEE COMPUTER SOCIETY, LOS ALAMITOS, CALIF. [U.A.], (2006, ISBN 978 0 7695 2746 8, Seiten 291 298) betrifft einen Ansatz zur Erstellung hochauflösender Videopanoramen von Sportveranstaltungen in großem Maßstab. In einem Fußballszenario werden zwei ARRIFLEX D-20 "Film-Style"-Digitalkameras verwendet, um beide Seiten des Spielfelds sowie große Teile der Tribünen einzufangen. Aus den aufgenommenen Bildern der linken und rechten Ansicht wurde mithilfe ausgefeilter Bildverarbeitungsalgorithmen eine Panoramaansicht mit einer Auflösung von 5016x1400 pel (5k) erzeugt.

Die Masterarbeit von Ragnar Langseth mit dem Titel "Implementation of a distributed real time video panorama pipe line for creating high quality virtual views" (2014), Seiten 1145, URL: http://home.ifi.uio.no/paalh/students/RagnarLangseth.pdf betrifft eine Methode zur Erstellung virtueller Ansichten aus einem zylindrischen Panorama, die es mehreren Benutzern ermöglicht, aus demselben Panoramavideo individuelle virtuelle Kameras zu erstellen mit dem Schwerpunkt auf der Erstellung des Panoramas. Das Panorama muss in Echtzeit und mit sehr hoher Qualität erstellt werden. Eine Prototyp-Aufnahmepipeline ist in der Lage, 4K-Panorama-Videos von fünf HD-Kameras in Echtzeit zu produzieren, mit der Möglichkeit einer weiteren Hochskalierung. Das zylindrische Panorama wird ohne sichtbare Nahtstellen erstellt.

Das Dokument LI XUAN ET AL: "Panoramic video stitching based on multi-band image blending", SPIE PROCEEDINGS; [PROCEEDINGS OF SPIE ISSN 0277-786X], SPIE, US, Bd. 11069, 6. Mai 2019 (2019-05-06), Seiten 110690F-110690F betrifft die Erzeugung von Panoramabildern. Die Panoramabilder werden durch Bildzusammenfügung mit Bildern erzeugt, die von Kameras aufgenommen wurden, die in einem Winkel von 360 Grad aufgestellt sind. Das von der herkömmlichen Fischaugenlinse aufgenommene Bild weist jedoch eine starke Verzerrung auf, so dass viele herkömmliche Bildfusionsalgorithmen dafür nicht geeignet sind. Zur Lösung dieses Problem wird eine Methode basierend auf Multiband-Bildmischung vorgeschlagen, um das Echtzeit-Stitching von 6-Wege-Fischaugenvideos zu realisieren und schließlich ein Ausgabevideo zu erzeugen. Beim Stitching wird das Video in Frames zerlegt. Nach der Bildausrichtung wird eine Multiband-Fusionsmethode verwendet, um die Hochfrequenzmerkmale zu verschmelzen, wodurch der Verschmelzungsgrad im Bildbereich kleiner wird und Doppelungen im Mosaikbereich vermieden werden. Im Gegensatz zum Stitching-Algorithmus der Faltungs-Pyramide, der nicht allzu sehr vom Überlappungsbereich abhängt, behält der vorgeschlagene Algorithmus mehr Bilddetails bei und reduziert die Verzerrung.

Das Dokument US 2019 109 975 A1 betrifft ein System zur Bereitstellung von virtuellen Schwenk-Neige-Zoom-Videofunktionen (PTZ) für mehrere Benutzer über ein Datennetzwerk. Das System umfasst eine oder mehrere Netzwerk-Videokameras, die so positioniert sind, dass sie eine Videoaufnahme eines realen Zielfelds oder eines entsprechenden Teilbereichs davon erstellen und ein entsprechendes Rohvideosegment an das Datennetzwerk ausgeben, eine Back-End-Kamerakalibrierungseinheit, die ausgeführt ist zum Ermitteln einer relativen Position und Ausrichtung der jeweiligen Netzwerkvideokamera in Bezug auf einen dreidimensionalen Weltraum für das Zielfeld und zum Speichern der erhaltenen relativen Position und Ausrichtung als Metadaten für die jeweilige Netzwerkvideokamera, einer Back-End-Video Verarbeitungseinheit, die mit dem Datennetzwerk verbunden und dazu ausgeführt ist, die jeweiligen Rohvideosegmente, die von der/den Netzwerkvideokamera(s) aufgezeichnet wurden, zu empfangen und Videoinhalte der jeweiligen Rohvideosegmente in einem Back-End Videospeicher zu speichern oder zu puffern, eine Back-End-Video-Streaming-Einheit, die dazu ausgeführt ist, die gespeicherten oder gepufferten Videoinhalte und die gespeicherten Metadaten für die jeweilige Netzwerk-Videokamera auf das Datennetzwerk zu streamen, und eine Vielzahl von Client-Geräten zur Nutzung durch die Vielzahl von Benutzern.

Der vorliegenden Erfindung liegt die Aufgabe zugrunde, ein Verfahren der oben angegebenen Art bereitzustellen, um eine Bereitstellung von Bildern mit einer hohen Bildqualität zu ermöglichen.

Die der vorliegenden Erfindung zugrundeliegende Aufgabe wird durch ein Verfahren mit den Merkmalen des Anspruchs 1 gelöst. Vorteilhafte Ausgestaltungen des Verfahrens sind in den von Anspruch 1 abhängigen Ansprüchen beschrieben.

Im Genaueren wird die der vorliegenden Erfindung zugrundeliegende Aufgabe durch ein Verfahren zur Erzeugung einer Panoramakarte zur Erfassung einer Szene basierend auf einer Mehrzahl individueller Kameras, wobei jede der Kameras mit ihrem Sichtfeld zumindest einen Teilbereich der Szene erfasst und die Kameras die Szene mit ihren Sichtfeldern in Kombination vollständig erfassen, gelöst. Das Verfahren umfasst die Schritte Extrahieren von wenigstens einem Einzelbild von jeder der Kameras, Ermitteln einer Ausrichtung der Kameras basierend auf dem wenigstens einen Einzelbild von jeder der Kameras, und Erzeugen der Panoramakarte der Szene als Matrix von Kartenelementen mit einer Abbildungsvorschrift der Kartenelemente auf Bildkoordinaten der Kameras basierend auf der ermittelten Ausrichtung der Kameras.

Das erfindungsgemäße Verfahren ist dadurch gekennzeichnet, dass das Erzeugen der Panoramakarte der Szene als Matrix von Kartenelementen mit einer Abbildungsvorschrift der Kartenelemente auf Bildkoordinaten der Kameras basierend auf der ermittelten Ausrichtung der Kameras innerhalb wenigstens eines Kombinationsbereichs eines Überlappungsbereichs der Sichtfelder von einer Mehrzahl der Kameras ein Erzeugen der Abbildungsvorschrift der Kartenelemente auf mit dem Kombinationsbereich korrespondierende Bildkoordinaten von der Mehrzahl der Kameras umfasst.

Die der vorliegenden Erfindung zugrundeliegende Aufgabe wird zusätzlich durch ein Kamerasystem mit den Merkmalen des Anspruchs 15 gelöst.

Im Genaueren wird die der vorliegenden Erfindung zugrundeliegende Aufgabe durch ein Kamerasystem zur Erfassung einer Szene mit einer Mehrzahl individueller Kameras, wobei jede der Kameras mit ihrem Sichtfeld zumindest einen Teilbereich der Szene erfasst und die Kameras die Szene mit ihren Sichtfeldern in Kombination vollständig erfassen, gelöst.

Das erfindungsgemäße Kamerasystem ist dadurch gekennzeichnet, dass das Kamerasystem ausgeführt ist, das obige Verfahren durchzuführen.

Das erfindungsgemäße Verfahren und das erfindungsgemäße Kamerasystem weisen verschiedene Vorteile im Zusammenhang der Bildverarbeitung von einer Mehrzahl gemeinsam angeordneter Kameras auf. Insbesondere ermöglicht die so durchgeführte, automatische Erzeugung der Panoramakarte eine einfache und effektive Bildverarbeitung, wobei eine Anzahl erforderlicher Verarbeitungsschritte, bei denen Qualitätsverluste auftreten können, reduziert werden kann. Da die Panoramakarte selber keine Bildinformation enthält, sondern lediglich eine Abbildungsvorschrift ihrer Kartenelemente auf Bildkoordinaten der Kameras bereitstellt, kann die Panoramakarte selber quasi ohne Verluste erstellt werden. Außerdem kann durch die Erstellung und anschließende Verwendung der Panoramakarte eine effiziente Bildverarbeitung durchgeführt werden, da nicht jedes Mal eine Anpassung und/oder Kombination von Bildern der einzelnen Kameras durchgeführt werden müssen. Durch die Abbildungsvorschrift kann hier ein einfacher Zugriff auf die unverarbeiteten Bilder der Kameras, die auch als Rohbilder bezeichnet werden, erfolgen.

Die Panoramakarte enthält eine Matrix von Kartenelementen. Dabei handelt es sich typischerweise um eine zweidimensionale Matrix, unabhängig von einer weiteren Verwendung und einer möglichen Anordnung der Kartenelemente in einem 3D-Raum. Jedes Kartenelement umfasst vorzugsweise verschiedene Informationselemente. Die Kartenelemente können auch eine Kombination verschiedenartiger Informationselemente aufweisen. Zusätzlich kann die Panoramakarte übergeordnete Informationselemente aufweisen, die beispielsweise allen Kartenelementen oder Gruppen von Kartenelementen zugeordnet sind. Die Kartenelemente werden dabei automatisch basierend auf dem wenigstens einen Einzelbild von den Kameras erzeugt.

Die Szene stellt einen mit den individuellen Kameras des Kamerasystems zu erfassenden Bereich dar. Üblicherweise handelt es sich bei der Szene um einen Bereich von besonderem Interesse, um Bilder davon insbesondere als Bewegtbilder bereitzustellen. Dies gilt beispielweise für Sportveranstaltungen, aber prinzipiell auch für künstlerische Darbietungen, wie Theateraufführungen, Konzerte oder ähnliches, Vorträge, Präsentationen, Lehrveranstaltungen oder andere.

Die Erfassung der Szene betrifft eine Erzeugung von Bildinformation, welche die Szene wiedergibt. Entsprechend sind die individuellen Kameras ausgeführt, Bildinformation in ihren Sichtfeldern zu erzeugen. Durch die Panoramakarte wird dabei angegeben, wie die Bildinformation der einzelnen Kameras die Szene gemeinsam wiedergeben kann.

Der Begriff der Panoramakarte deutet dabei bereits an, dass durch die Panoramakarte üblicherweise eine weitwinklige Abdeckung der Szene erfolgt, wobei dies nicht zwingend erforderlich ist. Prinzipiell sind mit dem Kamerasystem Erfassungen von Winkelbereichen mit bis zu 180° oder sogar mehr möglich. Mit einem zunehmenden Abstand des Kamerasystems von der Szene ergibt sich typischerweise eine weniger weitwinklige Erfassung der Szene.

Das Extrahieren von wenigstens einem Einzelbild von jeder der Kameras stellt Bildinformation zur weiteren Verarbeitung bereit. Es können auch mehrere Einzelbilder oder Bewegtbilder bzw. Videobilder mit einer Mehrzahl Einzelbilder von jeder der Kameras extrahiert werden.

Das Ermitteln einer Ausrichtung der Kameras erfolgt basierend auf dem wenigstens einen Einzelbild. Dabei ist insbesondere jeweils eine Ausrichtung von Kameras zu bestimmen, deren Sichtfelder aneinandergrenzen. Die Ausrichtung kann beispielsweise jeweils paarweise für Kameras, deren Sichtfelder aneinandergrenzen, ermittelt werden. Alternativ oder zusätzlich kann die Ausrichtung der Kameras bezogen auf eine gemeinsame Referenz ermittelt werden.

Die erzeugte Abbildungsvorschrift der Kartenelemente auf die Bildkoordinaten der Kameras basierend auf der ermittelten Ausrichtung der Kameras ermöglicht eine prinzipiell beliebige Bilderzeugung basierend auf der Panoramakarte. Durch die Abbildungsvorschrift der Kartenelemente auf die jeweiligen Bildkoordinaten der Kameras wird insgesamt eine Abbildungsvorschrift der Panoramakarte auf die Bilder der Kameras erzeugt, so dass auf Basis dieser Bilder eine jeweils gewünschte weitere Bilderzeugung bzw. -verarbeitung erfolgen kann, beispielsweise zur Bereitstellung einer Panoramadarstellung, um eine inhaltliche Analyse der gesamten Szene durchzuführen, oder um basierend auf der Panoramakarte auf einfache Weise ein qualitativ hochwertiges Kamerabild einer virtuellen Kamera zu erzeugen, die üblicherweise einen Teilbereich der Szene darstellt.

Die Abbildungsvorschrift der Kartenelemente auf die Bildkoordinaten kann abhängig von einer Auflösung der individuellen Kameras und der Anordnung der Kartenelemente der Panoramakarte durch eine Abbildung der Kartenelemente auf Bildpunkte der individuellen Kameras gebildet werden. Üblich ist jedoch, dass die Abbildungsvorschrift der Kartenelemente auf die Bildkoordinaten der Kameras eine Abbildung jedes Kartenelementes auf eine Bildkoordinate zumindest einer der Kameras angibt, d.h. auf einen Koordinatenpunkt, der sich logisch zwischen Bildpunkten der jeweiligen Kamera befinden kann. Bei einem nachfolgen Zugriff über das Kartenelement kann dann ein mit der jeweiligen Bildkoordinate korrespondierender Koordinatenbildpunkt basierend auf den Bildpunkten der jeweiligen Kamera erzeugt werden. Dazu sind verschiedene Verfahren bekannt, die als Interpolation bezeichnet werden. Als besonders vorteilhaft hat sich dabei eine bilineare Interpolation erwiesen.

Der Kombinationsbereich stellt die Panoramakarte mit einer gleichzeitigen Abbildungsvorschrift der Kartenelemente auf die Bildkoordinaten mehrerer Kameras bereit, so dass über das entsprechende Kartenelement auf die Bildkoordinaten mehrerer Kameras zugegriffen werden kann. Die Position des Kombinationsbereichs kann innerhalb des Überlappungsbereichs prinzipiell frei gewählt werden. Beispielsweise kann der Kombinationsbereich ein zentraler Bereich oder ein Mittelbereich des Überlappungsbereichs bezogen auf eine Anordnung der Sichtfelder der Kameras zueinander sein. Alternativ kann der Kombinationsbereich asymmetrisch bezogen auf eine Anordnung der Sichtfelder der Kameras zueinander sein. Die Ausdehnung des Kombinationsbereichs zwischen den Sichtfeldern der Kameras kann prinzipiell beliebig gewählt sein, wobei ein Kombinationsbereich mit einer größeren Ausdehnung teilweise weichere, weniger sichtbare Übergänge bei der Kombination der Bilder der einzelnen Kameras ermöglicht, aber die Bildverarbeitung aufwendiger macht. Der Kombinationsbereich erstreckt sich üblicherweise über eine gesamte vertikale bzw. horizontale Ausdehnung über die überlappenden Sichtfelder der jeweiligen Kameras abhängig von der Anordnung der Sichtfelder der Kameras zueinander. Es ergibt sich, dass der Kombinationsbereich einen gesamten Übergang zwischen aneinandergrenzenden Sichtfeldern abdeckt, um einen gewünschten Übergang zwischen den aneinandergrenzenden Sichtfeldern zu ermöglichen, so dass kein Übergang ohne Kombinationsbereich erfolgt. Eine Implementierung des Kombinationsbereichs kann beispielsweise erfolgen, indem die Kartenelemente des gesamten Überlappungsbereichs eine Abbildungsvorschrift auf korrespondierende Bildkoordinaten von der Mehrzahl der Kameras umfassen. Somit kann der Kombinationsbereich auf einfache Weise angepasst werden, indem nur innerhalb des Kombinationsbereichs ein Zugriff auf die Bildkoordinaten der mehreren Kameras erfolgt. Eine Änderung des Kombinationsbereichs erfordert nicht, dass die Panoramakarte als solche neu erstellt wird. Der Überlappungsbereich wird vollständig durch den Kombinationsbereich und angrenzende Einzelkamerabereiche definiert.

Das Kamerasystem umfasst zusätzlich zu den Kameras eine Datenverarbeitungseinheit mit einem Prozessor und einem Speicher, um die Panoramakarte zu erstellen und zu speichern. Verschiedene Arten von Prozessoren und Speicher sind als solche bekannt und können alternativ oder gemeinsam verwendet werden. Außerdem kann die Datenverarbeitungseinheit Bilder der individuellen Kameras empfangen, beispielsweise über einen internen Datenbus oder jeweils individuelle Datenverbindungen zwischen jeder der Kameras und der Datenverarbeitungseinheit, und diese verarbeiten und/oder unter Verwendung der Panoramakarte darauf zugreifen. Die Datenverarbeitungseinheit umfasst zusätzlich eine externe Übertragungsschnittstelle, beispielsweise um darüber ein Bild der Szene, insbesondere als Videobild, einer virtuellen Kamera bereitzustellen. Dazu kann die Datenverarbeitungseinheit basierend auf den Bildern der individuellen Kameras und unter Verwendung der Panoramakarte einen Videostream als "Bild" der virtuellen Kamera erzeugen.

Außerdem kann vorgesehen sein, dass das Kamerasystem eine der Datenverarbeitungseinheit zugeordnete oder darin integrierte Grafikeinheit aufweist, um bestimmte Verarbeitungsschritte der Rohbilder zu beschleunigen. Derartige Grafikeinheiten sind beispielsweise als Grafikkarten in üblichen Computern verbreitet. Die Grafikeinheiten sind zur Durchführung der bestimmten Verarbeitungsschritte optimiert, so dass eine schnelle und kostengünstige Bildverarbeitung ermöglicht wird. Die Grafikeinheiten umfassen typischerweise einen oder mehrere Grafikprozessoren und Grafikspeicher.

Um die Verwendung und Montage des Kamerasystems zu erleichtern, kann das Kamerasystem als autarke Einheit bereitgestellt werden, beispielsweise mit einer eingebauten Stromversorgung. Außerdem kann ein Anschluss des Kamerasystems erleichtert werden, wenn die externe Übertragungsschnittstelle als drahtlose Übertragungsschnittstelle implementiert ist. In dem Fall ist lediglich eine drahtlose Verbindung des Kamerasystems mit einer weiteren Übertragungsstrecke herzustellen, beispielsweise über eine Internetverbindung. Es können an sich beliebige drahtlose Übertragungsstandards für das Kamerasystem verwendet werden, beispielsweis UMTS, LTE, 5G, W-LAN oder andere. Die Übertragungsstandards müssen lediglich eine ausreichende Bandbreite zur Übertragung von Bildern, d.h. der Videobilder bzw. des Videostreams, mit einer gewünschten Qualität, die sich beispielsweise über eine Bitrate und mögliche Verzögerungen bei der Datenübertragung definieren lässt, bereitstellen.

Das Kamerasystem wird zur Überwachung der Szene üblicherweise in einem Mittelbereich an einem Rand an einer erhöhten Position fest montiert. Wenn die Szene ein Spielfeld für eine an sich beliebige Sportart umfasst, beispielsweise ein Fußballfeld, ein Handballfeld, ein Volleyballfeld oder ein Basketballfeld, um nur einige Arten von Spielfeldern beispielhaft zu nennen, wird das Kamerasystem beispielsweise auf Höhe einer Mittellinie des Spielfelds am Spielfeldrand oder mit einem geeigneten Abstand zum Spielfeldrand außerhalb des Spielfelds in einer erhöhten Position an einem Mast angebracht, so dass das Kamerasystem das Spielfeld vollständig erfassen kann. Das Kamerasystem ist dabei so ausgerichtet, dass die individuellen Kameras mit ihren Sichtfeldern jeweils zumindest einen Teilbereich der Szene mit dem Spielfeld erfassen, und die Szene mit dem Spielfeld durch die Kameras mit ihren Sichtfeldern vollständig erfasst wird. Entsprechendes gilt, wenn die Szene eine Bühne oder ähnliches für eine an sich beliebige künstlerische Vorführung umfasst.

Durch die gemeinsame Anordnung der Kameras ergibt sich eine einfache Möglichkeit, die Bilder der individuellen Kameras zu kombinieren. Die gemeinsame Anordnung der Kameras ist zumindest temporär festgelegt. Bei einer Änderung der Anordnung der individuellen Kameras relativ zueinander ist typischerweise eine neue Ausrichtung der Kameras basierend auf wenigstens einem Einzelbild von jeder der Kameras zu ermitteln, wodurch auch eine erneute Erzeugung der Panoramakarte erforderlich ist.

Die Kameras sind vorzugsweise derart gemeinsam angeordnet, dass sie an einem Punkt gemeinsam angeordnet sind, wobei sich aufgrund einer räumlichen Ausdehnung der Kameras geringfügige Positionsunterschiede ergeben können, die üblicherweise im Bereich von weniger als einem Meter, vorzugsweise von weniger als einem halben Meter, weiter bevorzugt im Bereich von weniger als 25 Zentimetern und besonders bevorzugt im Bereich von weniger als 15 Zentimetern liegen. Im Vergleich zu einem Abstand zu der Szene sind diese Positionsunterschiede typischerweise gering und fallen daher nicht ins Gewicht. Um die Szene mit den Kameras erfassen zu können, sind die Sichtfelder der Kameras unterschiedlich ausgerichtet.

Die Kameras sind vorzugsweise identisch ausgeführt, wodurch sich eine einfache Verwendung und Herstellung des Kamerasystems ergibt. Prinzipiell können aber beliebige Kameras verwendet werden. Das Kamerasystem kann also prinzipiell mit beliebigen Kameras gebildet sein. Die Kameras können beispielsweise unterschiedlich große Sichtfelder aufweisen, d.h. unterschiedliche Öffnungswinkel in horizontaler wie auch in vertikaler Richtung, wie auch unterschiedliche Bildauflösungen.

Vorzugsweise sind die Kameras nicht nur gemeinsam angeordnet, sondern auch in einem gemeinsamen Gehäuse des Kamerasystems angeordnet. Dadurch kann das Kamerasystem insgesamt einfach montiert werden, da nur eine einzelne Montage erforderlich ist. Außerdem ergibt sich durch die gemeinsame Anordnung in dem gemeinsamen Gehäuse des Kamerasystems eine feste Ausrichtung der Kameras zueinander. Insbesondere werden Bewegungen der Kameras relativ zueinander reduziert und sogar weitgehend ausgeschlossen.

Die Kameras können derart angeordnet sein, dass sie mit ihren Sichtfeldern in horizontaler Richtung oder in vertikaler Richtung jeweils einen Teilbereich der Szene erfassen, d.h. die Teilbereiche sind eindimensional angeordnet. Prinzipiell können die Sichtfelder zur Erfassung der Teilbereiche auch zweidimensional angeordnet sein, d.h. in horizontaler und zusätzlich in vertikaler Richtung. Die Anordnung und Ausrichtung basiert beispielsweise auf Eigenschaften von verwendeten Kameras, insbesondere dem Sichtfeld, einem Bildverhältnis wie auch einer Auflösung der einzelnen Kameras. Zusätzlich oder alternativ können die Anordnung und Ausrichtung basierend auf einer Form und Größe der Szene, einer Positionierung der Kameras und/oder einem gewünschten Detailgrad der Panoramakarte erfolgen. Prinzipiell können auch Sichtfelder derart angeordnet sein, dass sich beispielsweise in horizontaler Richtung eine Kombination von dem Sichtfeld einer Kamera mit mehreren, vertikal übereinander angeordneten Sichtfeldern ergibt. Auch kann jede Kamera eine unabhängige Ausrichtung ihres Sichtfeldes aufweisen, typischer weise horizontal oder vertikal.

Die Kameras können abhängig von einer Größe ihres Sichtfeldes, d.h. einem erfassten Winkelbereich, und der Szene als Weitwinkelkameras oder als Fischaugenkameras ausgeführt sein. Je größer der erfasste Winkelbereich, desto weniger Kameras sind erforderlich, um die Szene vollständig zu erfassen. Um übermäßige Verzerrungen und/oder andere Abbildungsfehler zu vermeiden, sind kleinere Öffnungswinkel der Sichtfelder vorteilhaft, beispielsweise Öffnungswinkel in zumindest einer Richtung von weniger als 150°, vorzugsweise nicht mehr als 130°, weiter vorzugsweise nicht mehr als 120°. Diese Öffnungswinkel erlauben es, abhängig von der Anordnung der Kameras die Szene mit insgesamt 180° oder sogar mehr unter Verwendung von lediglich zwei Kameras zu erfassen. Bei einer größeren Anzahl von Kameras können auch Sichtfelder mit einem Öffnungswinkel von 90° oder sogar weniger verwendet werden.

Bei einer statischen Szene, beispielsweise einem Spielfeld ohne Spieler und Zuschauer, können die Einzelbilder prinzipiell zeitversetzt bereitgestellt sein, da nur geringe zeitliche Änderungen der Bildinhalte der Kameras für die Szene zu erwarten sind. Dies ergibt sich dadurch, dass die Kameras gemeinsam an festen Positionen angebracht und angeordnet sind und üblicherweise keine Bewegung in der statischen Szene auftritt. Dies ist beispielsweise mit hinreichendem zeitlichem Abstand zu einem Sportereignis, welches von der Szene erfasst wird, der Fall. Üblicherweise werden jedoch die Einzelbilder im Wesentlichen zeitgleich extrahiert.

Die vollständige Abdeckung der Szene bedeutet, dass jeder Bereich der Szene von dem Sichtfeld von wenigstens einer der Kameras erfasst wird. Es ergeben sich dadurch aneinandergrenzende Sichtfelder der Kameras, wobei die Sichtfelder zumindest teilweise miteinander überlappen.

In vorteilhafter Ausgestaltung der Erfindung umfasst das Verfahren einen zusätzlichen Schritt zum Ermitteln von Bildkorrekturwerten für jede der Kameras basierend auf dem wenigstens einem Einzelbild von jeder der Kameras, und das Erzeugen der Panoramakarte der Szene als Matrix von Kartenelementen mit einer Abbildungsvorschrift der Kartenelemente auf Bildkoordinaten der Kameras basierend auf der ermittelten Ausrichtung der Kameras erfolgt unter zusätzlicher Berücksichtigung der ermittelten Bildkorrekturwerte der jeweiligen Kameras. Die ermittelten Bildkorrekturwerte können somit bereits bei der Erzeugung der Panoramakarte angewendet werden, so dass die Panoramakarte Bildkorrekturen für die Abbildung der der Kartenelemente auf Bildkoordinaten der Kameras basierend auf den ermittelten Bildkorrekturwerten enthält.

In vorteilhafter Ausgestaltung der Erfindung umfasst das Ermitteln von Bildkorrekturwerten wenigstens einen der Schritte aus Ermitteln von ersten Bildkorrekturwerten basierend auf intrinsischen Parametern von jeder der Kameras, und Ermitteln von zweiten Bildkorrekturwerten basierend auf einer Linsenverzerrung von jeder der Kameras. Die ersten und zweiten Bildkorrekturwerte können jeweils einzeln oder in Kombination ermittelt werden, wobei auch nur eine Art der Bildkorrekturwerte ermittelt werden kann. Die intrinsischen Parameter beschreiben ein Verhalten der jeweiligen Kamera beispielsweise basierend auf einem realen Kameramodell. Durch eine Anpassung der intrinsischen Parameter der individuellen Kameras, beispielsweise eine Brennweite, ein Zentrum der Bildebene und weitere umfassen können, kann insbesondere eine Rektifizierung von Bildern der Kameras durchgeführt werden. Dies ist sinnvoll, um beispielsweise über die gesamte Panoramakarte eine gleichmäßige Abbildung der Bilder der Kameras zu ermöglichen, so dass sich keine oder nur geringe perspektivische Änderungen ergeben. Die Linsenverzerrung betrifft kamerabedingte Abbildungseigenschaften, die ebenfalls kompensiert werden können.

In vorteilhafter Ausgestaltung der Erfindung umfasst das Verfahren einen zusätzlichen Schritt zum Erzeugen von Bildkorrekturkarten als Matrix von Kartenelementen für jede der Kameras, wobei jede Bildkorrekturkarte eine Korrekturabbildungsvorschrift der Kartenelemente der Bildkorrekturkarte auf Bildkoordinaten der entsprechenden Kameras basierend auf den entsprechenden ermittelten Bildkorrekturwerten umfasst, wobei vorzugsweise das Erzeugen der Panoramakarte der Szene als Matrix von Kartenelementen mit einer Abbildungsvorschrift der Kartenelemente auf Bildkoordinaten der Kameras basierend auf der ermittelten Ausrichtung der Kameras unter Verwendung der Bildkorrekturkarten erfolgt. Die Bildkorrekturkarten können prinzipiell auch zu einem späteren Zeitpunkt verwendet werden, um bei einem Zugriff auf die Bilder der Kameras, d.h. ohne Verwendung der Panoramakarte, mit korrigierten Bildern arbeiten zu können, wodurch eine zuverlässige Bildverarbeitung ausgehend von den Kameras und den davon bereitgestellten Rohbildern ermöglicht wird. In dem Fall können die Bildkorrekturkarten in einer beliebigen Form zusätzlich zu der Panoramakarte gespeichert werden.

In vorteilhafter Ausgestaltung der Erfindung umfasst das Verfahren einen zusätzlichen Schritt zum Ermitteln von Panoramakorrekturwerten für die Panoramakarte basierend auf dem wenigstens einem Einzelbild von jeder der Kameras, und das Erzeugen der Panoramakarte der Szene als Matrix von Kartenelementen mit einer Abbildungsvorschrift der Kartenelemente auf Bildkoordinaten der Kameras erfolgt unter zusätzlicher Berücksichtigung der ermittelten Panoramakorrekturwerte der Panoramakarte. Die Panoramakorrekturwerte der Panoramakarte betreffen eine Abbildungsvorschrift zur Kombination der Bilder der einzelnen Kameras, die für die gesamte Panoramakarte angegeben sind. Diese Panoramakorrekturwerte umfassen beispielsweise eine Anpassung von Helligkeitswerten basierend auf den ermittelten Einzelbildern von jeder der Kameras, so dass sich bei einer Kombination von Bildinhalten benachbarter Sichtfelder keine sichtbaren Helligkeitsunterschiede ergeben und über die gesamte Panoramakarte eine durchgehende Helligkeit vorliegt. Als Panoramakorrekturwerte können alternativ oder zusätzlich Farbwerte, Sättigung und/oder Kontrast ermittelt werden.

In vorteilhafter Ausgestaltung der Erfindung umfasst das Ermitteln einer Ausrichtung der Kameras basierend auf dem wenigstens einen Einzelbild von jeder der Kameras ein Ermitteln von Rotationsinformation des wenigstens einen Einzelbildes von jeder der Kameras relativ zueinander oder bezogen auf eine gemeinsame Referenz, und/oder das Ermitteln einer Ausrichtung der Kameras basierend auf dem wenigstens einen Einzelbild von jeder der Kameras umfasst ein Ermitteln von Verschiebungsinformation des wenigstens einen Einzelbildes von jeder der Kameras relativ zueinander oder bezogen auf eine gemeinsame Referenz. Überlappungsbereiche ergeben sich zwischen den Sichtfeldern von benachbart angeordneten Kameras bzw. zwischen benachbart angeordneten Sichtfeldern der Kameras. In den Überlappungsbereichen wird somit jeweils Bildinformation von mehreren Kameras zur Verfügung gestellt. Abhängig von einer Anzahl, Ausrichtung und Ausgestaltung der Kameras, kann aber auch bei beispielsweise einer linearen Anordnung der Sichtfelder der Kameras in dem Überlappungsbereich zumindest teilweise eine Überlappung der Sichtfelder von drei oder noch mehr Kameras erfolgen. In dem Fall kann beispielsweise ein Sichtfeld von einer der Kameras vollständig von den Sichtfeldern benachbarter Kameras abgedeckt werden. Eine solche Redundanz kann vorteilhaft sein, um Übergänge zwischen den benachbarten Sichtfeldern von Kameras zu vermeiden oder um die Abbildungsqualität zu verbessern. Bei einer zweidimensionalen Anordnung der Sichtfelder, d.h. bei einer Anordnung der Sichtfelder in horizontaler und zusätzlich in vertikaler Richtung, ergeben sich in jeder Richtung entsprechende Überlappungsbereiche von den benachbarten Sichtfeldern der Kameras. Insbesondere die Rotationsinformation der Kameras ist relevant, da eine fehlerhafte rotatorische Ausrichtung der individuellen Kameras Auswirkungen auf die gesamte Panoramakarte haben kann. Die Auswirkungen auf die Panoramakarte können dabei prinzipiell größer sein für Bereiche der Panoramakarte, die weiter entfernt voneinander liegen. Die Rotationsinformation kann für eine oder mehrere Rotationsrichtungen ermittelt werden. Vorzugsweise wird die Rotationsinformation für drei Rotationsrichtungen ermittelt. Alternativ oder zusätzlich zu der Rotationsinformation kann eine translatorische Ausrichtung der Kameras ermittelt werden. Die Ausrichtung der Kameras wird in beiden Fällen insbesondere über identische Bildinhalte in den Sichtfeldern der Kameras ermittelt. Eine Ausrichtung der Kameras zueinander ist durch deren Anordnung zwar prinzipiell vorgegeben, diese Ausrichtung weist jedoch meist nur eine geringe, nicht ausreichende Genauigkeit auf. Die gemeinsame Referenz kann eine der Kameras oder eine andere Referenz außerhalb des Kamerasystems sein.

In vorteilhafter Ausgestaltung der Erfindung umfasst das Ermitteln einer Ausrichtung der Kameras basierend auf dem wenigstens einen Einzelbild von jeder der Kameras ein Identifizieren identischer Bildinhalte der Einzelbilder in Überlappungsbereichen der Sichtfelder von einer Mehrzahl der Kameras und ein Ermitteln der Ausrichtung der Kameras basierend auf einer Anordnung der identischen Bildinhalte der Einzelbilder in den Überlappungsbereichen der Sichtfelder von der Mehrzahl der Kameras. Die identischen Bildinhalte betreffen einzelne Bildpunkte oder Strukturen aus mehreren Bildpunkten, die in den Überlappungsbereichen der Sichtfelder der betreffenden Kameras erfasst werden und benutzt werden können, um die entsprechende Ausrichtung der Kameras zu ermitteln. Eine größere Anzahl der identischen Bildinhalte ermöglicht dabei üblicherweise eine genauere Ermittlung der Ausrichtung der Sichtfelder der Kameras. Es erfolgt eine automatische Ermittlung der Ausrichtung der Kameras basierend auf den identischen Bildinhalten der Einzelbilder in den Überlappungsbereichen der Sichtfelder der Kameras.

In vorteilhafter Ausgestaltung der Erfindung umfasst das Erzeugen der Panoramakarte der Szene als Matrix von Kartenelementen mit einer Abbildungsvorschrift der Kartenelemente auf Bildkoordinaten der Kameras basierend auf der ermittelten Ausrichtung der Kameras innerhalb wenigstens eines Einzelkamerabereichs eines Überlappungsbereichs der Sichtfelder von einer Mehrzahl der Kameras ein Erzeugen der Abbildungsvorschrift der Kartenelemente auf mit dem wenigstens einen Einzelkamerabereich korrespondierende Bildkoordinaten nur einer Kamera von der Mehrzahl der Kameras. Es wird also in dem Einzelkamerabereich die Abbildungsvorschrift der Kartenelemente auf entsprechende Bildkoordinaten nur einer der Kameras erzeugt. Dabei kann der Überlappungsbereich mehrere Einzelkamerabereiche aufweisen, beispielsweise bei einem durch die Sichtfelder von zwei Kameras gebildeten Überlappungsbereich einen Einzelkamerabereich für jede der Kameras, wobei die Einzelkamerabereiche an Randbereichen des Überlappungsbereichs angeordnet sind. Prinzipiell können die Einzelkamerabereiche unmittelbar aneinander angrenzen, so dass auf der Panoramakarte basierende Bilder in dem einen Einzelkamerabereich auf Bildkoordinaten einer der Kameras abgebildet werden und in dem unmittelbar angrenzenden, anderen Einzelkamerabereich auf Bildkoordinaten einer anderen Kamera abgebildet werden. Vorzugsweise ist zwischen den Einzelkamerabereichen aber ein Kombinationsbereich angeordnet.

In vorteilhafter Ausgestaltung der Erfindung umfasst das Erzeugen der Abbildungsvorschrift der Kartenelemente auf mit dem Kombinationsbereich korrespondierende Bildkoordinaten von der Mehrzahl der Kameras ein Erzeugen der Abbildungsvorschrift mit einer Kombinationsregel zur Abbildung der Kartenelemente auf eine Kombination von Bildkoordinaten von der Mehrzahl der Kameras in dem Kombinationsbereich. Die Kombinationsregel gibt also im Detail an, wie die Bildkoordinaten von den Kameras in dem Kombinationsbereich zu einer kombinierten Abbildungsvorschrift kombiniert werden, um darauf basierend beispielsweise ein Bild einer virtuellen Kamera zu erstellen, so dass im Kombinationsbereich ein möglichst nahtloser Übergang zwischen den Bildern der individuellen Kameras erzeugt werden kann. Die Kombinationsregel wird dabei als Teil der Panoramakarte gespeichert und ist vorzugsweise den einzelnen Kartenelementen der Panoramakarte zugeordnet. Es kann also eine Kombinationsregel für jedes Kartenelement der Panoramakarte festgelegt werden. Dazu können beispielsweise Gewichte für einzelne Kartenelemente der Panoramakarte in dem Kombinationsbereich definiert werden, die angeben, zu welchem Teil die Bildkoordinaten der Kameras kombiniert werden an der Position des entsprechenden Kartenelements. Die Kombinationsregel kann also individuelle Gewichtungen für jedes der Kartenelemente in dem Kombinationsbereich angeben. Alternativ kann eine regelmäßige Änderung der Gewichte von dem Sichtfeld einer Kamera in Richtung zu dem Sichtfeld einer anderen Kamera erfolgen. Die Gewichte ändern sich also über den Kombinationsbereich. Es sind neben einer linearen Änderung der Gewichte auch anderen Arten der Veränderung der Gewichte bekannt, beispielsweise mit einer asymptotischen Annäherung an 0 bzw. 1 zwischen Randbereichen des Kombinationsbereichs und einer großen Steigung dazwischen. Die Anpassung der Gewichte kann dabei unregelmäßig in der Richtung des Übergangs zwischen den überlappenden Sichtfeldern sein, so dass der Übergang beispielsweise verwischt wird. Die Summe der Gewichte ist für jedes Kartenelement vorzugsweise eins. Durch eine Zuordnung der Gewichte 0 und 1 kann auch auf einfache Weise der jeweilige Einzelbildbereich innerhalb des Überlappungsbereichs erzeugt werden, wobei eine einheitliche Verarbeitung für den gesamten Überlappungsbereich erfolgen kann. Die Kombinationsregel kann beispielsweise verwendet werden, um ein einfaches Überblenden zwischen den Bildern verschiedener Kameras in dem Kombinationsbereich durchzuführen, wobei in dem Kombinationsbereich beispielsweise ein Bildanteil einer der Kameras reduziert wird, während der Bildanteil der anderen Kamera erhöht wird. Die Gewichtung der Kartenelemente für die Bildkoordinaten der einzelnen Kameras in dem Kombinationsbereich entspricht also einer Anpassung der Intensitäten für die jeweiligen Bildkoordinaten. Dadurch können harte, sichtbare Übergänge vermieden werden und es entsteht ein einheitlicher Bildeindruck bei der Erzeugung von Bildern basierend auf der Panoramakarte.

In vorteilhafter Ausgestaltung der Erfindung umfasst das Erzeugen der Abbildungsvorschrift mit einer Kombinationsregel zur Abbildung der Kartenelemente auf eine Kombination von Bildkoordinaten von der Mehrzahl der Kameras in dem Kombinationsbereich ein Erzeugen der Abbildungsvorschrift mit einer mehrdimensionalen Kombinationsregel basierend auf einer Mehrzahl Bildverarbeitungsebenen, insbesondere für eine Mehrzahl von Frequenzen im Rahmen eines Mehrfrequenz-Überblendens. Die mehrdimensionale Kombinationsregel kann beispielsweise nach der Art eines Kombinationsvektors für jedes Kartenelement der Panoramakarte festgelegt werden. Alternativ können verschiedenen Kombinationsregeln unabhängig voneinander festgelegt werden. Durch die mehrdimensionale Kombinationsregel kann somit eine Basis beispielsweise für ein Mehrfrequenz-Überblenden geschaffen werden, was eine einfache und effiziente Durchführung des Überblendens ermöglicht. Ein Mehrfrequenz-Überblenden basiert typischerweise auf einer Transformation von Bildinhalten in den Frequenzbereich, um darauf basierend Details zum Überblenden zu bestimmen, d.h. eine Überblendungsinformation. Dabei werden mehrere unterschiedliche Frequenzen betrachtet, die typischerweise durch Bildpyramiden repräsentiert werden, wobei jede Ebene der Pyramiden mit einer der verschiedenen Frequenzen korrespondiert. Darauf basierend wird detaillierte Überblendungsinformation bestimmt. Um eine effiziente Verarbeitung von Bildinformation zu ermöglichen, wird die Kombinationsregel lediglich im Kombinationsbereich erstellt, der mit Teilbereichen der Rohbilder verschiedener Kameras korrespondiert. Eine Betrachtung vollständiger Rohbilder ist nicht erforderlich.

In vorteilhafter Ausgestaltung der Erfindung umfasst das Erzeugen der Abbildungsvorschrift der Kartenelemente auf mit dem Überlappungsbereich korrespondierende Bildkoordinaten von der Mehrzahl der Kameras ein Definieren von wenigstens einem mit dem Kombinationsbereich korrespondierenden Bildbereich im Sichtfeld von jeder von der Mehrzahl der Kameras, insbesondere zur Bestimmung von Überblendungsinformation zum Überblenden zwischen Sichtfeldern der Mehrzahl der Kameras im Kombinationsbereich, insbesondere zur Bestimmung von Überblendungsinformation basierend auf einer Mehrzahl von Frequenzen im Rahmen eines Mehrfrequenz-Überblendens. Das Definieren der entsprechenden Bildbereiche im Sichtfeld der jeweiligen Kameras ermöglicht einen besonders effektiven Zugriff auf die Rohbilder der Kameras, wobei sich der Zugriff unmittelbar aus der Panoramakarte ergibt. Dieser Zugriff auf die Rohbilder kann durchgeführt werden, um besonders rechenintensive oder zeitkritische Operationen durchzuführen. Die detaillierte Überblendungsinformation wird vorzugsweise verwendet, um basierend auf der mehrdimensionalen Kombinationsregel sowie der Abbildung der Kartenelemente auf die Bildkoordinaten der mehreren Kameras das Überblenden durchzuführen, so dass eine bestmögliche Qualität von basierend auf der Panoramakarte erzeugter Bildinformation erzielt werden kann.

In vorteilhafter Ausgestaltung der Erfindung umfasst das Erzeugen der Panoramakarte der Szene ein Erzeugen der Panoramakarte der Szene als geometrische Abbildung von einer Abbildungsfläche im dreidimensionalen Raum auf Bildkoordinaten der Kameras, wobei die Abbildungsfläche vorzugsweise als Zylindermantelfläche ausgeführt ist. Die geometrische Abbildung der Abbildungsfläche im dreidimensionalen Raum ist insbesondere wichtig, wenn die Szene mit einem Winkelbereich des Kamerasystems im Weitwinkelbereich oder darüber hinaus erfasst werden soll. Dies betrifft also Winkelbereiche von wenigstens etwa 120°, vorzugsweise wenigstens 150° oder mehr. Insbesondere bei einem Winkelbereich von mehr als 180° kann keine einfache zweidimensionale Darstellung erfolgen, so dass die geometrische Abbildung von der Abbildungsfläche im dreidimensionalen Raum auf die Bildkoordinaten der Kameras erforderlich wird. Bei der Erfassung einer typischen Szene, beispielsweise mit einem Spielfeld, hat sich eine zylindrische Abbildung als gut geeignet erwiesen. Die geometrische Abbildung von der Abbildungsfläche im dreidimensionalen Raum auf die Bildkoordinaten der Kameras erfolgt unter Berücksichtigung verschiedener geometrische Parameter der Abbildungsfläche, einer Ausrichtung der Abbildungsfläche und einer Positionierung der Abbildungsfläche. Für den bevorzugten Fall, dass die Abbildungsfläche als Zylindermantelfläche ausgeführt ist, sind also beispielsweise Zylinderparameter wie ein Zylinderradius, ein Zylindermittelpunkt, Position bezogen auf die Abbildungsfläche, oder eine Winkelausrichtung bezogen auf die Abbildungsfläche zu bestimmen. Über die Auswahl der obigen Parameter, d.h. der geometrischen Parameter der Abbildungsfläche, der Ausrichtung der Abbildungsfläche und der Positionierung der Abbildungsfläche, kann eine gewünschte Erfassung der Szene mit der Panoramakarte definiert werden. Die Durchführung der geometrischen Abbildung kann beispielsweise unter Verwendung von Raytraycing erfolgen, wobei prinzipiell auch andere Verfahren verwendet werden können.

In vorteilhafter Ausgestaltung der Erfindung umfasst das Verfahren einen zusätzlichen Schritt zum Bestimmen von Metainformation in Bezug auf die Szene und zum Hinzufügen der Metainformation zu der Panoramakarte. Die Metainformation ist vorzugsweise den Kartenelementen der Panoramakarte individuell zugeordnet. Die Metainformation ist typischerweise eine inhaltliche Information in Bezug auf eine zu dem Kartenelement gehörende Position in der Szene. Die Metainformation kann bei einem Spielfeld innerhalb der Szene beispielsweise Zuordnungen von Kartenelementen zu einem Spielfeldbereich, einem Außenbereich des Spielfelds, einem Zuschauerbereich, einem Tor, einem Netz, einem Korb, einer Begrenzungslinie, insbesondere einer Spielfeldbegrenzungslinie, einer Mittellinie, individueller Bereiche oder Linien des Spielfelds, insbesondere abhängig von einer Sportart, z.B. ein Strafraum, eine 3-Punkte-Linie, oder ein Torraum, oder ähnliches umfassen. Die Metainformation kann automatisch, halbautomatisch oder manuell erzeugt und der Panoramakarte zugeordnet werden, d.h. durch eine künstliche Intelligenz, beispielsweise basierend auf einem neuronalen Netz, oder eine Kombination aus einer künstlichen Intelligenz und einem menschlichen Operator. Beispielsweise bei einer Bühne kann andere Art der Metainformation erzeugt werden, beispielsweise Bühnenränder, Orchestergraben, Vorhang, Mikrofon oder ähnliches. Die Metainformation kann nach dem Erzeugen der Panoramakarte jederzeit erzeugt und dieser hinzugefügt werden. Auch kann die Metainformation bereits vor dem Erzeugen der Panoramakarte bestimmt und dieser bei ihrer Erzeugung hinzufügt werden.

In vorteilhafter Ausgestaltung der Erfindung umfasst das Bestimmen von Metainformation in Bezug auf die Szene ein Bestimmen der Metainformation basierend auf dem wenigstens einen Einzelbild von jeder der Kameras, und/oder das Bestimmen von Metainformation in Bezug auf die Szene umfasst ein Erzeugen wenigstens eines Panoramabilds der Szene, insbesondere basierend auf der Panoramakarte, und ein Bestimmen der Metainformation basierend auf dem wenigstens einen Panoramabild, und/oder das Bestimmen von Metainformation in Bezug auf die Szene umfasst ein Erzeugen wenigstens eines virtuellen Kamerabilds der Szene basierend auf der Panoramakarte und ein Bestimmen der Metainformation basierend auf dem wenigstens einen virtuellen Kamerabild. Die Metainformation kann somit basierend auf unterschiedlichen Bereichen der Szene bestimmt werden.

In dem oben beschrieben Verfahren sind die einzelnen Verfahrensschritte in ihrer Reihenfolge austauschbar. Angegebene Abläufe sind rein beispielhaft und einzelne Verfahrensschritte können optional sein, wie sich für den Fachmann ohne Weiteres ergibt.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Darstellung eines erfindungsgemäßen Kamerasystems mit einer Mehrzahl Kameras gemäß einer ersten, bevorzugten Ausführungsform, wobei das Kamerasystem eine Szene mit einem Spielfeld erfasst;
- Figur 2:: eine schematische, beispielhafte Darstellung einer Datenverarbeitungseinheit des Kamerasystems aus Fig. 1;
- Figur 3:: ein Ablaufdiagramm eines Verfahrens zur Erzeugung einer Panoramakarte zur Erfassung einer Szene basierend auf einer Mehrzahl individueller Kameras mit dem Kamerasystem aus Fig. 1;
- Figur 4:: in a) eine schematische, beispielhafte Darstellung einer mit dem Kamerasystem aus Fig. 1 erfassten Szene mit einem Haus sowie in b) von mit dem Kamerasystem erfasste Einzelbilder der Szene ohne Verarbeitung, in c) die Einzelbilder nach einer Rektifizierung, und in d) die Einzelbilder mit einer Erfassung von Hausecken als Bildinhalten;
- Figur 5:: eine schematische, beispielhafte Darstellung einer mit dem Kamerasystem aus Fig. 1 erfassten Szene, die ein Spielfeld umfasst, mit von den beiden Kameras des Kamerasystems aus Fig. 1 erfassten Teilbereichen der Szene und einem sich ergebenden Überlappungsbereich in einer Draufsicht,
- Figur 6:: eine schematische Darstellung einer Korrekturkarte und eines Bildes einer der Kameras mit Kartenelementen mit ihrer Korrekturabbildungsvorschrift auf Bildkoordinaten des Bildes,
- Figur 7:: eine schematische Darstellung einer Panoramakarte mit einer Matrix von Kartenelementen, die eine Abbildungsvorschrift auf die Bildkoordinaten der Kameras des Kamerasystems aus Fig. 1 unter Verwendung von Korrekturkarten enthalten,
- Figur 8:: eine schematische Darstellung von mit den Kameras des Kamerasystems aus Figur 1 extrahierten Einzelbildern sowie von zu den jeweiligen Einzelbildern gehörigen Laplace-Pyramiden für verschiedene Frequenzen,
- Figur 9:: eine schematische Darstellung von zu einem der Einzelbilder aus Fig. 8 gehörigen Ebenengewichten für Laplace-Pyramiden für verschiedene Pyramidenebenen, die mit unterschiedlichen Frequenzen korrespondieren,
- Figur 10:: eine schematische Darstellung von einer räumlichen Anordnung von mit dem Kamerasystem aus Fig. 1 erhaltenen Einzelbildern mit einem Winkel zueinander in einer Draufsicht a) und in einer Seitenansicht b),
- Figur 11:: eine schematische Darstellung einer geometrischen Abbildung zwischen einer Abbildungsfläche im dreidimensionalen Raum und den Bildkoordinaten der Einzelbilder der beiden Kameras des Kamerasystems aus Fig. 1,
- Figur 12:: eine schematische Darstellung einer Bilderzeugung einer virtuellen Kamera basierend auf der Panoramakarte aus Fig. 7 mit einer geometrischen Abbildung zwischen einer Abbildungsfläche im dreidimensionalen Raum und Bildkoordinaten der Einzelbilder von den beiden Kameras des Kamerasystems aus Fig. 1,
- Figur 13:: eine schematische Darstellung eines erfindungsgemäßen Kamerasystems mit einer Mehrzahl Kameras gemäß einer zweiten Ausführungsform zur Erfassung einer Szene,
- Figur 14:: eine schematische Darstellung einer Szene mit einem Spielfeld, das mit dem Kamerasystem aus Fig. 13 erfasst wird, in einer Draufsicht,
- Figur 15:: eine schematische Darstellung einer geometrischen Abbildung zwischen einer Abbildungsfläche im dreidimensionalen Raum und den Bildkoordinaten der Einzelbilder der Kameras des Kamerasystems der zweiten Ausführungsform aus Fig. 13, und
- Figur 16:: eine schematische Darstellung einer Panoramakarte mit einer Matrix von Kartenelementen, die eine Abbildungsvorschrift auf die Bildkoordinaten der vier Kameras des Kamerasystems der zweiten Ausführungsform aus Fig. 13 unter Verwendung von vier Korrekturkarten enthalten.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

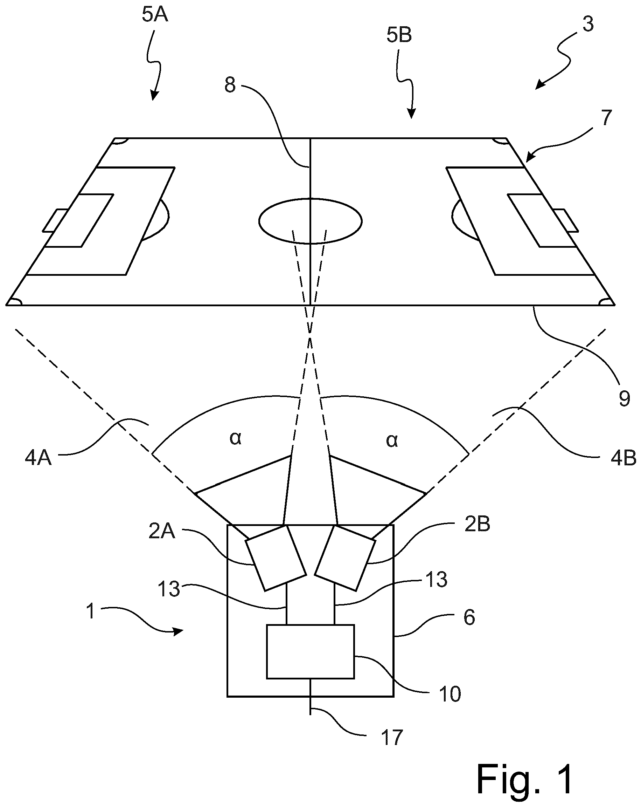

Figur 1 zeigt ein Kamerasystem 1 mit einer Mehrzahl individueller Kameras 2A, 2B gemäß einer ersten Ausführungsform. Das Kamerasystem 1 der ersten Ausführungsform umfasst beispielhaft zwei Kameras 2A, 2B.

Das Kamerasystem 1 ist ausgeführt zur Erfassung einer Szene 3 mit den beiden Kameras 2A, 2B, wobei jede der beiden Kameras 2A, 2B mit ihrem Sichtfeld 4A, 4B einen entsprechenden Teilbereich 5A, 5B der Szene 3 erfasst. Die beiden Kameras 2A, 2B können abhängig von einer Größe ihres Sichtfeldes 4A, 4B, d.h. einem erfassten Winkelbereich in zwei Richtungen, und der Szene 3 mit einem geeigneten Öffnungswinkel α von beispielsweise 90° oder mehr ausgeführt sein. Beispielsweise können die Kameras 2A, 2B als Weitwinkelkameras oder als Fischaugenkameras ausgeführt sein. Die beiden Kameras 2A, 2B sind in diesem Ausführungsbeispiel identisch ausgeführt, d.h. sie weisen insbesondere den gleichen Öffnungswinkel α auf und stellen digitale Bilder mit der gleichen Auflösung, d.h. der gleichen Anzahl Bildpunkte, bereit. Hier betrifft der diskutierte Öffnungswinkel α insbesondere einen Öffnungswinkel α in einer horizontalen Richtung, wobei die Ausführungen prinzipiell auch für einen vertikalen Öffnungswinkel α gelten.

Die Szene 3 stellt einen mit den beiden individuellen Kameras 2A, 2B des Kamerasystems 1 zu erfassenden Bereich dar. Üblicherweise handelt es sich bei der Szene 3 um einen Bereich von besonderem Interesse, um Bilder davon, insbesondere als Bewegtbilder, bereitzustellen. Dies gilt beispielweise für Sportveranstaltungen, aber prinzipiell auch für künstlerische Darbietungen, wie beispielsweise Theateraufführungen, Konzerte oder ähnliches, Vorträge, Präsentationen, Lehrveranstaltungen oder andere.

Die Erfassung der Szene 3 betrifft einer Erzeugung von Bildinformation, welche die Szene 3 wiedergibt. Entsprechend sind die individuellen Kameras 2A, 2B ausgeführt, Bildinformation in ihren Sichtfeldern 4A, 4B zu erzeugen.

Das Kamerasystem 1 erfasst die Szene 3 mit den beiden Kameras 2A, 2B basierend auf der Kombination der Sichtfelder 4A, 4B vollständig. Die Szene 3 wird also von den beiden Kameras 2A, 2B vollständig abgedeckt, so dass jeder Teilbereich 5A, 5B der Szene 3 von dem Sichtfeld 4A, 4B von wenigstens einer der beiden Kameras 2A, 2B erfasst wird. Die Sichtfelder 4A, 4B der beiden Kameras 2A, 2B sind somit in diesem Ausführungsbeispiel in einer horizontalen Richtung aneinandergrenzend angeordnet, wobei die beiden Sichtfelder 4A, 4B teilweise miteinander überlappen, wie untenstehend im Detail ausgeführt wird.

Zur gemeinsamen Erfassung der Szene 3 sind die beiden Kameras 2A, 2B gemeinsam an einem Punkt angeordnet, d.h. mit einem geringen Abstand von wenigen Zentimetern zueinander. Dabei sind die Sichtfelder 4A, 4B der beiden Kameras 2A, 2B zur Erfassung der Szene 3 unterschiedlich ausgerichtet. Die gemeinsame Anordnung der beiden Kameras 2A, 2B wird in diesem Ausführungsbeispiel durch eine gemeinsame Anordnung der beiden Kameras 2A, 2B in einem gemeinsamen Gehäuse 6 des Kamerasystems 1 erreicht. Die beiden Kameras 2A, 2B sind in dem Gehäuse 6 des Kamerasystems 1 fest montiert und fest zueinander ausgerichtet, wodurch Bewegungen der Kameras 2A, 2B relativ zueinander reduziert und sogar weitgehend ausgeschlossen werden.

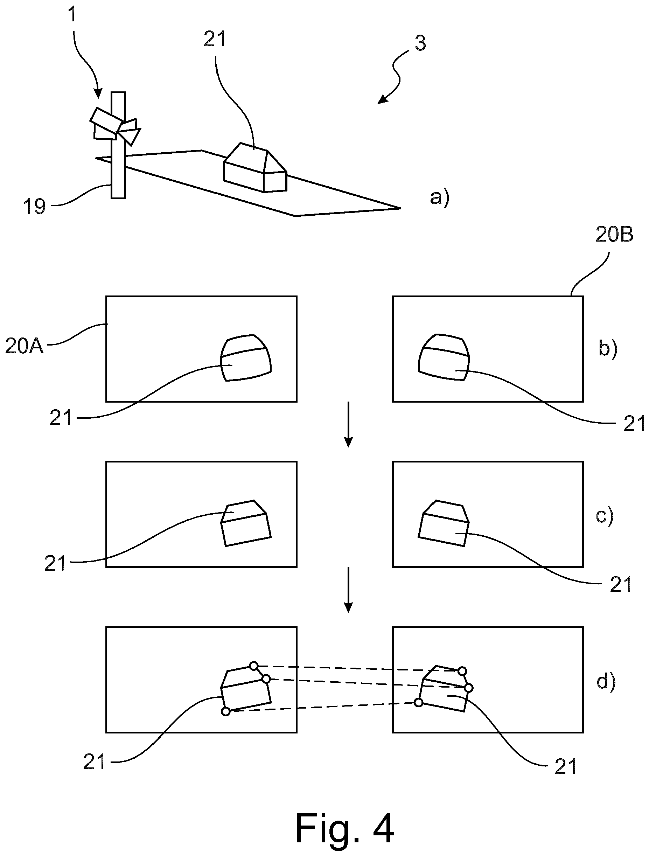

Zur Montage des Kamerasystems 1 ist nur eine einzelne Montage mit dem Gehäuse 6 erforderlich. Das Kamerasystem 1 wird zur Erfassung und Überwachung der Szene 3 beispielsweise in Bezug auf die Szene 3 in einem Mittelbereich an einem Rand an einer erhöhten Position angebracht, wie in Figur 1 beispielhaft für das dort als Szene 3 erfasste Spielfeld 7 dargestellt ist. Entsprechend ist das Kamerasystem 1 beispielsweise auf Höhe einer Mittellinie 8 des Spielfelds 7 am Spielfeldrand 9 oder mit einem geeigneten Abstand zum Spielfeldrand 9 außerhalb des Spielfelds 7 in einer erhöhten Position an einem Mast 19 oder bei einer Sporthalle an einer Wand- oder Deckenkonstruktion angebracht. Eine entsprechende Anbringung des Kamerasystems 1 an dem Mast 19 ist beispielhaft in Fig. 4a) dargestellt.

Die Anordnung und Ausrichtung des Kamerasystems 1 mit den beiden Kameras 2A, 2B erfolgt basierend auf Eigenschaften der beiden Kameras 2A, 2B wie dem Sichtfeld 4A, 4B, einem Bildverhältnis oder auch einer Auflösung der einzelnen Kameras 2A, 2B. Zusätzlich oder alternativ können die Anordnung und Ausrichtung der Kameras 2A, 2B basierend auf einer Form und Größe Szene 3, einer Positionierung der Kameras 2A, 2B und/oder einem gewünschten Detailgrad einer zu erstellenden Panoramakarte 18 erfolgen. Letzteres wird nachstehend im Detail beschrieben.

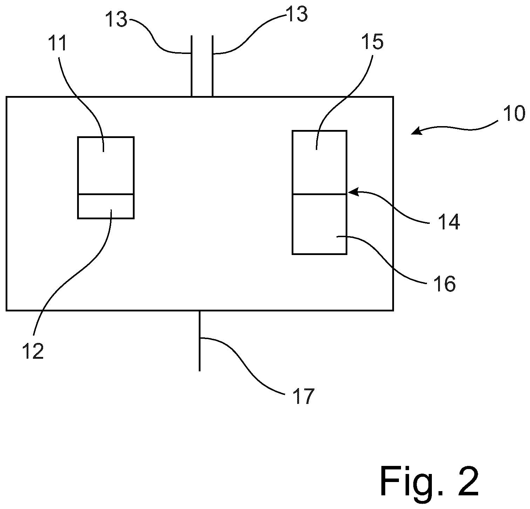

Das Kamerasystem 1 umfasst zusätzlich zu den beiden Kameras 2A, 2B eine Datenverarbeitungseinheit 10, die einzeln in Figur 2 dargestellt ist. Die Datenverarbeitungseinheit 10 umfasst einen Prozessor 11 und einen Speicher 12. Verschiedene Arten von Prozessoren 11 und Speicher 12 sind als solche bekannt und können alternativ oder gemeinsam verwendet werden. Die Datenverarbeitungseinheit 10 ist über mehrere parallele Datenverbindungen 13 mit jeder der beiden Kameras 2A, 2B verbunden. Die Datenverarbeitungseinheit 10 empfängt über die Datenverbindungen 13 unverarbeitete Bilder, im weiteren auch Rohbilder genannt, von den beiden Kameras 2A, 2B, wobei die Kameras 2A, 2B intern Bildkompensationen oder andere Bildverarbeitungen bezogen auf die entsprechende Kamera 2A, 2B durchführen können. Die Datenverarbeitungseinheit 10 ist weiter ausgeführt, diese Bilder wie nachfolgend im Detail beschrieben zu verarbeiten.

Das Kamerasystem 1 umfasst außerdem eine Grafikeinheit 14, die in diesem Ausführungsbeispiel in die Datenverarbeitungseinheit 10 integriert ist. Derartige Grafikeinheiten 14 sind beispielsweise als Grafikkarten in üblichen Computern verbreitet. Solche Grafikeinheiten 14 sind zur Durchführung bestimmter Verarbeitungsschritte optimiert, um eine schnelle und kostengünstige Bildverarbeitung durchzuführen. Derartige Grafikeinheiten 14 umfassen typischerweise jeweils einen oder mehrere Grafikprozessoren 15 und einen Grafikspeicher 16, wobei jeder Grafikprozessor 15 eine Mehrzahl individueller Rechenkerne aufweisen kann. Entsprechendes gilt für den Prozessor 11, der ebenfalls eine Mehrzahl individueller Rechenkerne aufweisen kann.

Die Datenverarbeitungseinheit 10 erzeugt basierend auf den Bildern der beiden Kameras 2A, 2B ein Videobild der Szene 3 als virtuelles Kamerabild, welches über eine externe Übertragungsschnittstelle 17 bereitgestellt wird. Im Detail wird basierend auf den Bildern der beiden Kameras 2A, 2B einen Videostream als "Bild" der virtuellen Kamera 40 erzeugt, wie nachstehend ausgeführt wird.

In diesem Ausführungsbeispiel ist die externe Übertragungsschnittstelle 17 durch eine Datenleitung dargestellt. Alternativ kann das Kamerasystem 1 ein Funkmodul aufweisen, welches die externe Übertragungsschnittstelle 17 zur Übertragung des virtuellen Kamerabildes implementiert.

Um die Verwendung und Montage des Kamerasystems 1 zu erleichtern, kann das Kamerasystem 1 als autarke Einheit ausgeführt sein. Entsprechend kann das Kamerasystem 1 eine eingebaute Stromversorgung aufweisen, beispielsweise in Form eines wieder aufladbaren elektrischen Energiespeichers zusammen mit einem Solarpanel zur Erzeugung von elektrischer Energie. Wenn das Kamerasystem 1 nicht zum Dauerbetrieb ausgeführt ist, sondern beispielsweise an einzelnen Tagen nur für jeweils wenige Stunden verwendet wird, ist nur ein vergleichsweise kleines Solarpanel erforderlich, da der Energiespeicher bei Nichtbenutzung über einen langen Zeitraum geladen werden kann und die elektrische Energie bei Benutzung nur für jeweils einen kurzen Zeitraum, beispielsweise eine Spieldauer einer Sportveranstaltung, bereitgestellt wird. Bei der Ausführung des Kamerasystems 1 als autarke Einheit ist die externe Übertragungsschnittstelle 17 vorzugsweise wie oben angegeben als drahtlose Übertragungsschnittstelle 17 implementiert. Es können an sich beliebige drahtlose Übertragungsstandards für die Übertragungsschnittstelle 17 des Kamerasystems 1 verwendet werden, beispielsweis UMTS, LTE, 5G, W-LAN oder andere. Das autarke Kamerasystem 1 kann somit insgesamt ohne Kabel verwendet werden.

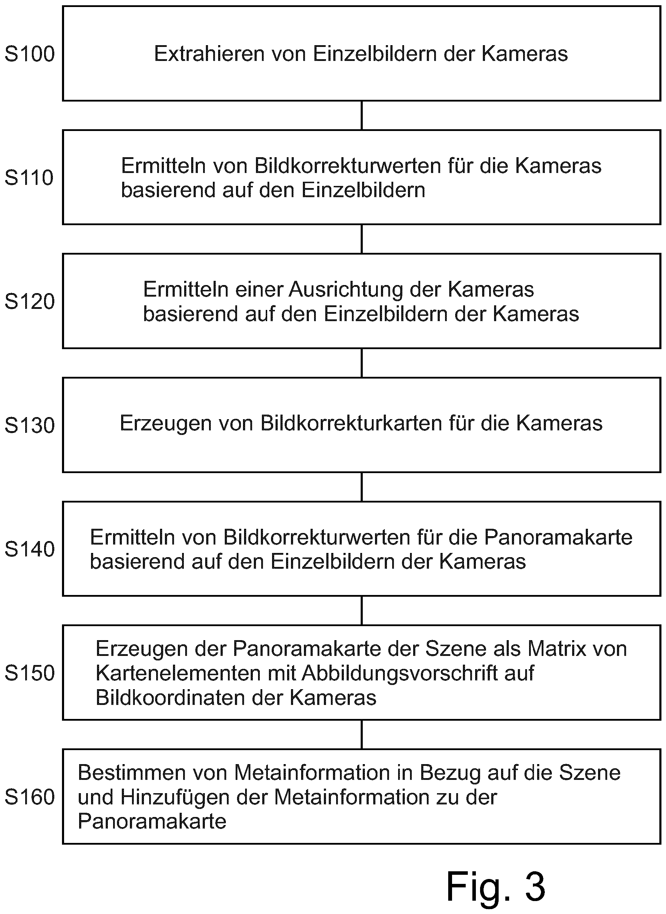

Das Kamerasystem 1 ist ausgeführt, das nachstehend beschriebene Verfahren zur Erzeugung einer Panoramakarte 18 zur Erfassung der Szene 3 basierend auf den beiden Kameras 2A, 2B durchzuführen. Die einzelnen Schritte des Verfahrens sind in Figur 3 angegeben. Das Erzeugen der Panoramakarte 18 dient zur Erfassung der Szene 3 basierend auf den beiden Kameras 2A, 2B, die - wie oben bereits ausgeführt wurde - mit ihrem Sichtfeld 4A, 4B jeweils einen Teilbereich 5A, 5B der Szene 3 erfassen, so dass die Kameras 2A, 2B die Szene 3 mit ihren Sichtfeldern 4A, 4B in Kombination vollständig erfassen. Das Erstellen der Panoramakarte 18 wird beispielhaft als Basis für die nachfolgende Erzeugung des Videobildes der virtuellen Kamera 40 durchgeführt.

In dem nachstehend beschrieben Verfahren sind die einzelnen Verfahrensschritte in ihrer Reihenfolge austauschbar. Angegebene Abläufe sind rein beispielhaft und einzelne Verfahrensschritte können optional sein, wie sich für den Fachmann in offensichtlicher Weise ergibt. Auch sind nicht alle Aspekte der einzelnen Verfahrensschritte jeweils vollumfänglich erforderlich, wie sich ebenfalls offensichtlich für den Fachmann ergibt.

Das Verfahren beginnt mit Schritt S100, der das Extrahieren von wenigstens einem Einzelbild 20A, 20B von jeder der Kameras 2A, 2B umfasst. Dies ist für die in Figur 4a) dargestellte Szene 3 beispielhaft in Figur 4b) gezeigt. In Figur 4a) ist der Einfachheit halber eine Szene 3 mit lediglich einem Haus 21 dargestellt, wobei die beschriebenen Prinzipien für prinzipiell beliebige Szenen 3 anwendbar sind. Das Haus 21 in Figur 4b) in beiden Einzelbildern 20A, 20B enthalten.

Bei einer statischen Szene 3, beispielsweise dem Spielfeld 7, wenn es nicht benutzt wird, d.h. auf dem Spielfeld 7 befinden sich keine sich bewegenden Spieler und außerhalb davon keine sich bewegenden Zuschauer, können die Einzelbilder 20A, 20B prinzipiell zeitversetzt bereitgestellt sein, da über die Zeit nur geringe Änderungen der Bildinhalte der Kameras 2A, 2B für die Szene 3 zu erwarten sind. Da die Kameras 2A, 2B gemeinsam in dem Gehäuse 6 montiert sind, sind die Kameras 2A, 2B an festen Positionen relativ zueinander angebracht und angeordnet, so dass üblicherweise auch keine Bewegung der beiden Kameras 2A, 2B relativ zu der Szene 3 oder auch zueinander auftritt. Alternativ werden jedoch die Einzelbilder 20A, 20B im Wesentlichen zeitgleich extrahiert, wodurch Einflüsse von Bewegungen der Kameras 2A, 2B oder einer Bewegung in der Szene 3 zuverlässig vermieden werden.

Das Extrahieren der Einzelbilder 20A, 20B von den beiden Kameras 2A, 2B stellt Bildinformation zur weiteren Verarbeitung bereit. Die Bildinformation wird vorliegend als digitale Bildinformation mit einer Punktmatrix von einzelnen Bildpunkten bereitgestellt. Es können auch mehrere Einzelbilder 20A, 20B oder Bewegtbilder bzw. Videobilder mit einer Mehrzahl Einzelbilder 20A, 20B von jeder der beiden Kameras 2A, 2B extrahiert werden.

Schritt S110 betrifft ein Ermitteln von Bildkorrekturwerten für jede der Kameras 2A, 2B basierend auf den Einzelbildern 20A, 20B von den beiden Kameras 2A, 2B.

Basierend auf intrinsischen Parametern von jeder der Kameras 2A, 2B werden erste Bildkorrekturwerte ermittelt. Zusätzlich werden basierend auf einer Linsenverzerrung von jeder der Kameras 2A, 2B zweite Bildkorrekturwerte ermittelt. Die intrinsischen Parameter beschreiben ein Verhalten der jeweiligen Kamera 2A, 2B beispielsweise basierend auf einem realen Kameramodell der beiden Kameras 2A, 2B. Basierend auf den intrinsischen Parametern der beiden Kameras 2A, 2B, beispielsweise eine Brennweite, eines Zentrums einer Bildebene oder andere, wird vorliegend eine Rektifizierung der Einzelbilder 20A, 20B von den beiden Kameras 2A, 2B durchgeführt, wie in Figur 4c) angedeutet ist. Die Linsenverzerrung betrifft kamerabedingte Abbildungseigenschaften, die vorliegend ebenfalls kompensiert werden.

In dem vorliegenden Ausführungsbeispiel werden sowohl die ersten wie auch die zweiten Bildkorrekturwerte ermittelt.

Schritt S120 betrifft ein Ermitteln einer Ausrichtung der Kameras 2A, 2B basierend auf den Einzelbildern 20A, 20B von den beiden Kameras 2A, 2B.

Es wird dabei die exakte Ausrichtung der beiden Kameras 2A, 2B in dem Kamerasystem 1 ermittelt, da bei der Montage der beiden Kameras 2A, 2B in dem Gehäuse 6 Toleranzen auftreten können und auch die Kameras 2A, 2B selber herstellungsbedingte Toleranzen aufweisen können.

Die Ausrichtung der beiden Kameras 2A, 2B wird basierend auf den beiden Einzelbildern 20A, 20B der beiden Kameras 2A, 2B als Rotationsinformation der beiden Einzelbilder 20A, 20B der beiden Kameras 2A, 2B relativ zueinander oder bezogen auf eine gemeinsame Referenz ermittelt. Die Rotationsinformation wird für drei mögliche Rotationsrichtungen ermittelt. Zusätzlich wird basierend auf den beiden Einzelbildern 20A, 20B der beiden Kameras 2A, 2B eine Verschiebungsinformation der beiden Einzelbilder 20A, 20B der beiden Kameras 2A, 2B relativ zueinander oder bezogen auf eine gemeinsame Referenz ermittelt, d.h. eine translatorische Ausrichtung der beiden Kameras 2A, 2B. Die Verschiebungsinformation wird ebenfalls für alle möglichen Richtungen bestimmt. Die gemeinsame Referenz kann eine der Kameras 2A, 2B oder eine andere Referenz innerhalb oder außerhalb des Kamerasystems 1 sein.

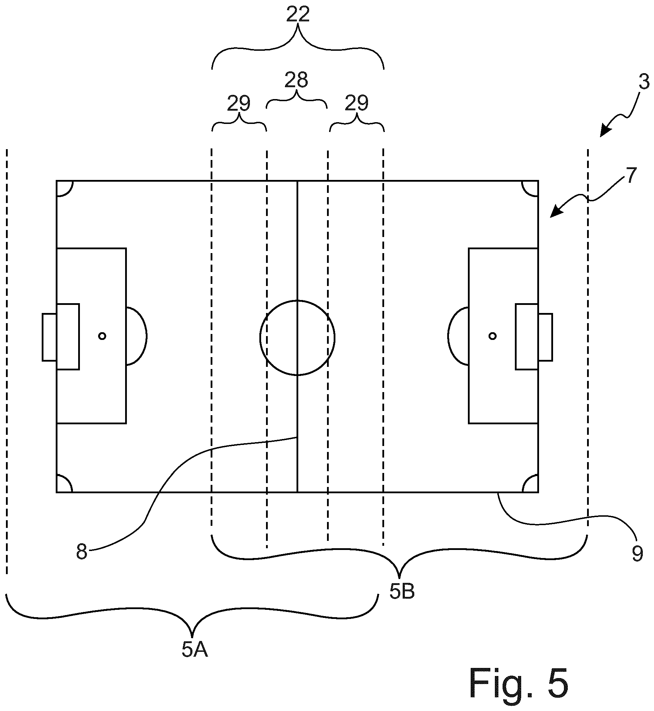

Als Basis für das Ermitteln der Ausrichtung der beiden Einzelbilder 20A, 20B und damit der beiden Kameras 2A, 2B wird ein Überlappungsbereich 22 betrachtet, der sich zwischen den Sichtfeldern 4A, 4B der beiden benachbart angeordneten Kameras 2A, 2B bzw. zwischen den benachbart angeordneten Sichtfeldern 4A, 4B der beiden Kameras 2A, 2B ergibt. Ein solcher Überlappungsbereich 22 ist in Figur 5 für die dortige Szene 3 beispielhaft dargestellt und ergibt sich auch beispielsweise aus Figur 4, in der jedes der beiden Einzelbilder 20A, 20B das Haus 21 der dortigen Szene 3 zeigt. In dem Überlappungsbereich 22, der beispielsweise in Figur 5 dargestellt ist, wird somit Bildinformation von den beiden Kameras 2A, 2B zur Verfügung gestellt.

Die Ausrichtung der beiden Kameras 2A, 2B wird über identische Bildinhalte 23 in den Sichtfeldern 4A, 4B der Kameras 2A, 2B ermittelt. Es werden also basierend auf den Einzelbildern 20A, 20B von den beiden Kameras 2A, 2B identische Bildinhalte 23 der Einzelbilder 20A, 20B in dem Überlappungsbereich 22 der Sichtfelder 4A, 4B der beiden Kameras 2A, 2B identifiziert. Die identischen Bildinhalte 23 betreffen einzelne Bildpunkte oder Strukturen aus oder mit mehreren Bildpunkten, die in dem Überlappungsbereich 22 der Sichtfelder 4A, 4B der beiden Kameras 2A, 2B erfasst und benutzt werden, um die Ausrichtung der Kameras 2A, 2B zu ermitteln. Als solche Bildinhalte 23 sind hier beispielhaft in Figur 4d) verschiedene Hausecken 23 des Hauses 21 optisch dargestellt.

Je mehr identische Bildinhalte 23 in dem Überlappungsbereich 22 ermittelt werden können, umso genauer kann die Ausrichtung der Sichtfelder 4A, 4B der Kameras 2A, 2B über die Einzelbilder 20A, 20B ermittelt werden. Die Ausrichtung der beiden Kameras 2A, 2B wird in diesem Ausführungsbeispiel basierend auf den identischen Bildinhalten 23 der beiden Einzelbilder 20A, 20B in dem Überlappungsbereich 22 der Sichtfelder 4A, 4B der beiden Kameras 2A, 2B automatisch ermittelt.

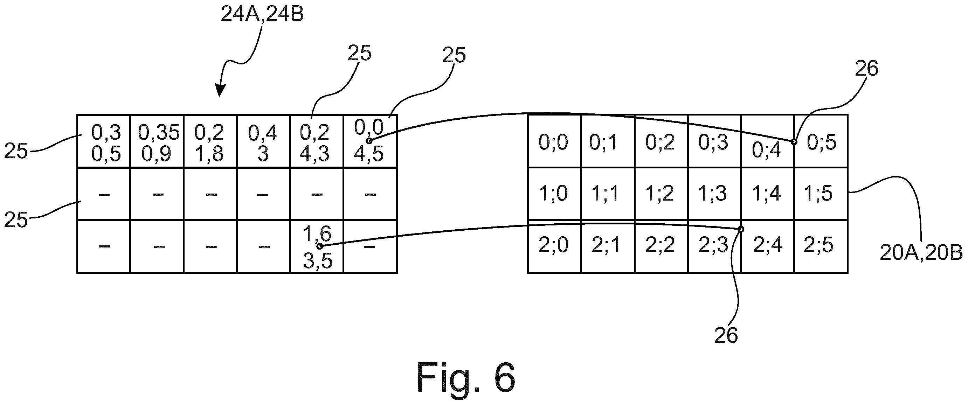

Schritt S130 betrifft ein Erzeugen von Bildkorrekturkarten 24A, 24B als Matrix von Kartenelementen 25 für jede der beiden Kameras 2A, 2B, wobei jede Bildkorrekturkarte 24A, 24B eine Korrekturabbildungsvorschrift der Kartenelemente 25 der Bildkorrekturkarte 24A, 24B auf Bildkoordinaten 26 der beiden Kameras 2A, 2B basierend auf den entsprechenden ermittelten Bildkorrekturwerten umfasst. Eine solche Bildkorrekturkarte 24A, 24B ist mit ihren Kartenelementen 25 mit ihrer Korrekturabbildungsvorschrift auf Bildkoordinaten 26 der entsprechenden Einzelbilder 20A, 20B beispielhaft in Figur 6 dargestellt. Dadurch werden entsprechende Korrekturabbildungsvorschriften der Kartenelemente 25 der Bildkorrekturkarten 24A, 24B auf die Bildkoordinaten 26 der beiden Kameras 2A, 2B definiert.

Schritt S140 betrifft ein Ermitteln von Panoramakorrekturwerten für die Panoramakarte 18 basierend auf den Einzelbildern 20A, 20B von jeder der Kameras 2A, 2B. Die Panoramakorrekturwerte umfassen beispielsweise eine Anpassung von Helligkeitswerten basierend auf den ermittelten Einzelbildern 20A, 20B der beiden Kameras 2A, 2B, so dass bei einer Kombination von Bildinhalten benachbarter Sichtfelder 4A, 4B sichtbare Helligkeitsunterschiede reduziert oder sogar vermieden werden, so dass über die gesamte Panoramakarte 18 eine gleichmäßige Helligkeit vorliegt. Die Panoramakorrekturwerte der Panoramakarte 18 betreffen also eine Abbildungsvorschrift zur Kombination der erzeugten Einzelbilder 20A, 20B über die Panoramakarte 18, wohingegen die Korrekturkarten 24A, 24B Bildkorrekturen für die einzelnen Kameras 2A, 2B betreffen. Als Panoramakorrekturwerte können alternativ oder zusätzlich Farbwerte, Sättigung und/oder Kontrast ermittelt werden.

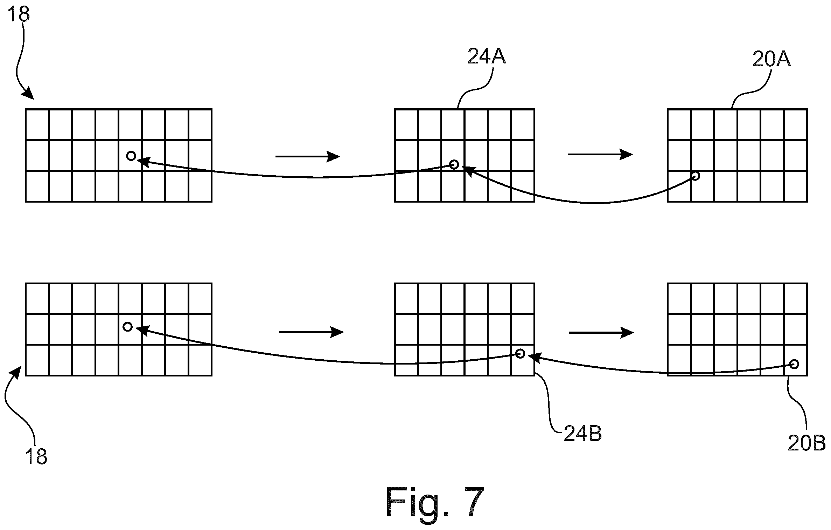

Schritt S150 betrifft ein Erzeugen der Panoramakarte 18 der Szene 3 als Matrix von Kartenelementen 27 mit einer Abbildungsvorschrift der Kartenelemente 27 auf die Bildkoordinaten 26 der Kameras 2A,2B basierend auf der ermittelten Ausrichtung der Kameras 2A, 2B. Eine solche Panoramakarte 18 ist beispielhaft in Figur 7 dargestellt.

Die Panoramakarte 18 enthält also eine Matrix von Kartenelementen 27, wie Figur 7 zeigt. Durch die Panoramakarte 18 wird angegeben, wie die Bildinformation der beiden Kameras 2A, 2B die Szene 3 gemeinsam wiedergeben kann. Es handelt sich vorliegend um eine zweidimensionale Matrix, unabhängig von einer weiteren Verwendung und einer möglichen Anordnung der Kartenelemente 27 in einem 3D-Raum. Jedes Kartenelement 27 umfasst vorzugsweise verschiedene Informationselemente, die beispielsweise eine Abbildungsvorschrift der Kartenelemente 27 auf die Bildkoordinaten 26 von jeder der beiden Kameras 2A, 2B enthalten. Die Kartenelemente 27 können auch eine Kombination verschiedenartiger Informationselemente aufweisen. Zusätzlich kann die Panoramakarte 18 übergeordnete Informationselemente aufweisen, die beispielsweise allen Kartenelementen 27 oder Gruppen von Kartenelementen 27 zugeordnet sind. Die Kartenelemente 27 werden automatisch basierend auf den Einzelbildern 20A, 20B der beiden Kameras 2A, 2B erzeugt.

Wie durch den Begriff der Panoramakarte 18 angedeutet ist, erfolgt hier durch die Panoramakarte 18 eine weitwinklige Abdeckung der Szene 3 in horizontaler Richtung. Prinzipiell sind mit dem Kamerasystem 1 Erfassungen von Winkelbereichen mit bis zu 180° oder sogar darüber hinaus möglich, die mit der Panoramakarte 18 abgedeckt werden. Die erzeugte Abbildungsvorschrift der Kartenelemente 27 auf die Bildkoordinaten 26 der beiden Kameras 2A, 2B ermöglicht eine prinzipiell beliebige Bilderzeugung basierend auf der Panoramakarte 18, beispielsweise in der Form der bereits oben genannten virtuellen Kamera 40, die üblicherweise einen beliebigen Teilbereich 5A, 5B der Szene 3 darstellen kann, wobei durch die Panoramakarte 18 angegeben wird, wie die Bildinformation der beiden Kameras 2A, 2B die Szene 3 in der virtuellen Kamera 40 gemeinsam wiedergeben kann. Durch die Abbildungsvorschrift der Kartenelemente 27 auf die jeweiligen Bildkoordinaten 26 der beiden Kameras 2A, 2B kann auf Basis der unverarbeiteten Bilder von den beiden Kameras 2A, 2B im Betrieb eine jeweils gewünschte weitere Bilderzeugung bzw. -verarbeitung erfolgen. Dabei ermöglicht die Panoramakarte 18 einen direkten Zugriff auf die Rohbilder. Basierend auf der Panoramakarte 18 kann nicht nur das virtuelle Kamerabild erzeugt werden, sondern es kann auch eine Panoramadarstellung eines Bildes der Szene 3 erzeugt werden, um beispielsweise eine inhaltliche Analyse der gesamten Szene 3 durchzuführen.

Die Abbildungsvorschrift der Kartenelemente 27 auf die Bildkoordinaten 26 gibt eine Abbildung jedes Kartenelementes 27 auf wenigstens eine Bildkoordinate 26 von einer der Kameras 2A, 2B an, d.h. auf einen frei definierten Koordinatenpunkt, der sich üblicherweise logisch zwischen Bildpunkten der jeweiligen Kamera 2A, 2B befinden kann. Die Bildkoordinate 26 kann somit beispielhaft als Vektor angegeben sein, wobei ganzzahlige Koordinatenwerte exakte Positionen der Bildpunkte der Kameras 2A, 2B angeben. Für die Bildkoordinate 26 kann dann durch Interpolation, hier beispielhaft durch eine bilineare Interpolation, ein der Bildkoordinate 26 zugeordneter Bildpunkt bestimmt werden, um beispielweise einen Bildpunkt für eine Bildkoordinate 26 (2,65; 3,10) zwischen den Bildpunkten der Kameras 2A, 2B zu erzeugen.

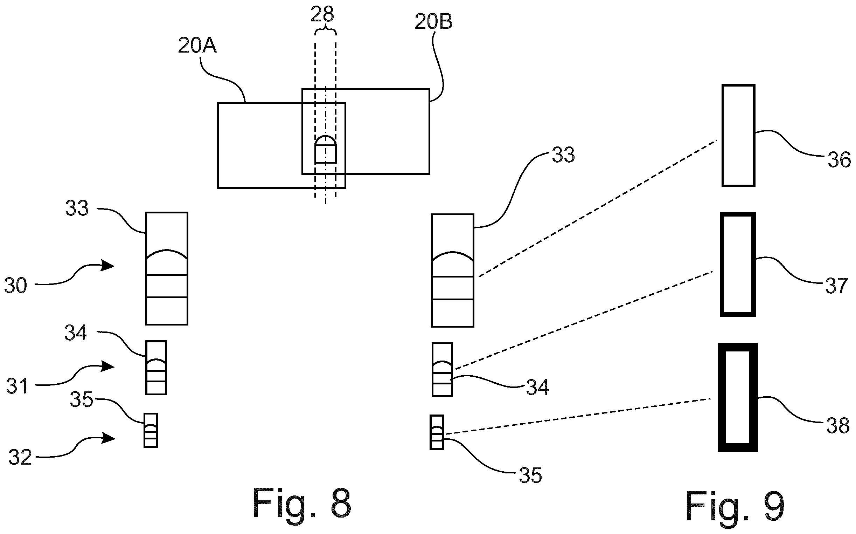

Der Überlappungsbereich 22 umfasst, wie beispielsweise in Figur 5 dargestellt ist, einen Kombinationsbereich 28 und zwei Einzelkamerabereiche 29. Der Kombinationsbereich 28 bildet eine Mitte des Überlappungsbereichs 22, an den sich zu beiden Seiten jeweils einer der Einzelkamerabereiche 29 anschließt. Innerhalb jedes der Einzelkamerabereiche 29 des Überlappungsbereichs 22 der Sichtfelder 4A, 4B der beiden Kameras 2A, 2B werden die Kartenelemente 27 der Panoramakarte 18 mit einer Abbildungsvorschrift der Kartenelemente 27 auf mit dem jeweiligen Einzelkamerabereich 29 korrespondierende Bildkoordinaten 26 nur einer der beiden Kameras 2A, 2B erzeugt. Es wird also in jedem Einzelkamerabereich 29 die Abbildungsvorschrift der Kartenelemente 27 auf entsprechende Bildkoordinaten 26 nur einer der Kameras 2A, 2B erzeugt. Innerhalb des Kombinationsbereichs 28 des Überlappungsbereichs 22 der Sichtfelder 4A, 4B von den beiden Kameras 2A, 2B werden die Kartenelemente 27 der Panoramakarte 18 mit einer Abbildungsvorschrift der Kartenelemente 27 auf mit dem Kombinationsbereich 28 korrespondierende Bildkoordinaten 26 von beiden Kameras 2A, 2B erzeugt. Der Kombinationsbereich 28 stellt also die Panoramakarte 18 mit einer gleichzeitigen Abbildungsvorschrift der Kartenelemente 27 auf die Bildkoordinaten 26 der beiden Kameras 2A, 2B bereit, so dass über jedes Kartenelement 27 des Kombinationsbereichs 28 auf die Bildkoordinaten 26 beider Kameras 2A, 2B zugegriffen werden kann, um diese zu kombinieren. Die Position und Ausdehnung des Kombinationsbereichs 28 kann innerhalb des Überlappungsbereichs 22 prinzipiell frei gewählt werden. Der Kombinationsbereich 28 erstreckt sich in dem hier beschriebenen Ausführungsbeispiel über eine gesamte vertikale Ausdehnung über die überlappenden Sichtfelder 4A, 4B der beiden Kameras 2A, 2B abhängig von der Anordnung der Sichtfelder 4A, 4B der beiden Kameras 2A, 2B zueinander. Bei einem vertikalen Versatz der Einzelbilder 20A, 20B, wie beispielhaft in Figur 8 dargestellt ist, wird nur der sich überlappende Bereich der beiden Einzelbilder 20A, 20B betrachtet. Der Kombinationsbereich 28 deckt somit einen gesamten Übergang zwischen den beiden aneinandergrenzenden Sichtfeldern 4A, 4B ab, um einen gewünschten nicht sichtbaren Übergang zwischen den aneinandergrenzenden Sichtfeldern 4A, 4B zu ermöglichen.

In der Panoramakarte 18 wird in dem Kombinationsbereich 28 die Abbildungsvorschrift mit einer Kombinationsregel zur Abbildung der Kartenelemente 27 auf eine Kombination von Bildkoordinaten 26 der beiden Kameras 2A, 2B erzeugt. Die Kombinationsregel gibt dabei im Detail an, wie die Bildkoordinaten 26 der beiden Kameras 2A, 2B in dem Kombinationsbereich 28 basierend auf der kombinierten Abbildungsvorschrift kombiniert werden, um darauf basierend beispielsweise das Bild der virtuellen Kamera 40 zu erstellen, so dass im Kombinationsbereich 28 ein möglichst nahtloser Übergang von Bildinformation der beiden Kameras 2A, 2B erzeugt werden kann. Somit können basierend auf der kombinierten Abbildungsvorschrift beispielsweise einzelne Bildpunkte der virtuellen Kamera 40 erzeugt werden. Die Kombinationsregel wird dabei als Teil der Panoramakarte 18 gespeichert und ist hier den einzelnen Kartenelementen 27 der Panoramakarte 18 zugeordnet. Es wird also eine Kombinationsregel mit der kombinierten Abbildungsvorschrift für jedes Kartenelement 27 der Panoramakarte 18 festgelegt.

Dazu können beispielsweise Gewichte für einzelne Kartenelemente 27 der Panoramakarte 18 in dem Kombinationsbereich 28 definiert werden. Die Gewichte geben an, zu welchem Teil die Bildkoordinaten 26 der beiden Kameras 2A, 2B kombiniert werden an der Position des entsprechenden Kartenelements 27 in der Panoramakarte 18. Die Kombinationsregel kann also individuelle Gewichtungen für jedes der Kartenelemente 27 in dem Kombinationsbereich 28 angeben. Die Summe der Gewichte ist für jedes Kartenelement 27 vorzugsweise eins.

In diesem Ausführungsbeispiel wird die Abbildungsvorschrift mit einer mehrdimensionalen Kombinationsregel basierend auf einer Mehrzahl Bildverarbeitungsebenen 30, 31, 32 für eine Mehrzahl von Frequenzen im Rahmen eines Mehrfrequenz-Überblendens erzeugt, wie in Figur 8 dargestellt ist. Das Mehrfrequenz-Überblenden erfolgt zu einem Zeitpunkt einer Bilderzeugung und basiert auf einer Transformation von Bildinhalten innerhalb des Kombinationsbereichs 28 in den Frequenzbereich, um darauf basierend Details zum Überblenden zu bestimmen, d.h. eine Überblendungsinformation. Es werden somit bei der Bilderzeugung basierend auf Bildinformation in dem Kombinationsbereich 28 für jedes der beiden Einzelbilder 20A, 20B Bildpyramiden 33, 34, 35 erzeugt, um darauf basierend die Details für jede Bildverarbeitungsebene 30, 31, 32 der Bildpyramiden 33, 34, 35, die mit den verschiedenen Frequenzen korrespondieren, zu bestimmen. Die Information der Bildpyramiden wird dann unter Verwendung von Ebenengewichten 36, 37, 38 der einzelnen Bildverarbeitungsebenen 30, 31, 32, wie in Figur 9 für eines der Einzelbilder 20A, 20B beispielhaft dargestellt ist, kombiniert. Diese Gewichte werden als mehrdimensionale Gewichte, beispielsweise als Gewichtsvektoren, mit einem einzelnen Gewichtswert für jede der Bildverarbeitungsebenen 30, 31, 32 ermittelt, wodurch die mehrdimensionale Kombinationsregel angegeben wird.

Die mehrdimensionale Kombinationsregel wird dabei beispielsweise nach der Art eines Kombinationsvektors für jedes Kartenelement 27 der Panoramakarte 18 festgelegt, wodurch eine Basis für ein nachfolgendes Mehrfrequenz-Überblenden geschaffen wird, in dem die jeweiligen Bildinhalte der beiden Kameras 2A, 2B basierend auf den Gewichten der Panoramakarte 18 kombiniert werden. Das Mehrfrequenz-Überblenden betrifft somit ein Überblenden zwischen den Sichtfeldern 4A, 4B der beiden Kameras 2A, 2B im Rahmen einer nachträglichen Bilderzeugung, beispielsweise im Rahmen der Bilderzeugung für die virtuelle Kamera 40.

Zusätzlich wird mit der Panoramakarte 18 oder als Teil der Panoramakarte 18 ein mit dem Kombinationsbereich 28 korrespondierender Bildbereich im Sichtfeld 4A, 4B von jeder der beiden Kameras 2A, 2B angegeben. Diese Bildbereiche werden bei einer nachfolgenden Bilderzeugung zur Bestimmung der jeweiligen Überblendungsinformation zum Überblenden zwischen den Sichtfeldern 4A, 4B der beiden Kameras 2A, 2B zur Bestimmung von Überblendungsinformation basierend auf einer Mehrzahl von Frequenzen im Rahmen eines Mehrfrequenz-Überblendens im Kombinationsbereich 28 verwendet. Durch die Angabe der Bildbereiche im Sichtfeld 4A, 4B der beiden Kameras 2A, 2B wird ein besonders effektiver Zugriff auf die Rohbilder der beiden Kameras 2A, 2B ermöglicht, um das Überblenden zu einem Zeitpunkt einer Bilderzeugung durchzuführen, wobei sich der Zugriff auf diese Bildbereiche unmittelbar aus der Panoramakarte 18 ergibt. Basierend auf diesen Bildbereichen können beispielsweise Operationen unmittelbar basierend auf den Rohbildern durchgeführt werden, um die Verarbeitung zu beschleunigen. Die Verarbeitungsgeschwindigkeit bei der Bilderzeugung hängt dabei ebenfalls von einer Erstreckung des Kombinationsbereichs 28 ab. Bei einem schmaleren Kombinationsbereich 28 ist weniger Berechnungsaufwand erforderlich, da nur kleinere Pyramidenebenen berechnet werden müssen.

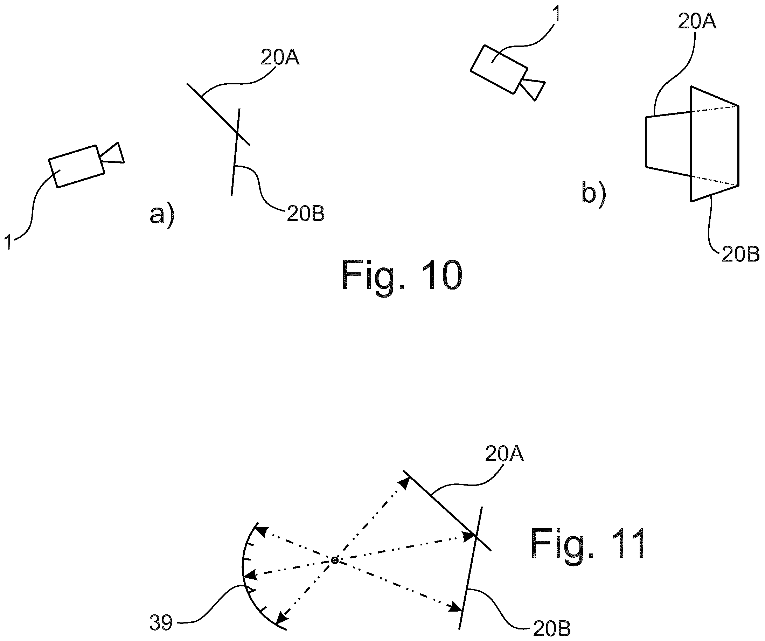

Das Erzeugen der Panoramakarte 18 der Szene 3 umfasst eine geometrische Abbildung von einer Abbildungsfläche 39 im dreidimensionalen Raum auf die Bildkoordinaten 26 der beiden Kameras 2A, 2B, wobei die Abbildungsfläche 39 in diesem Ausführungsbeispiel als Zylindermantelfläche ausgeführt ist. Details werden nachstehend unter Bezug auf die Figuren 10 und 11 erläutert.

Das Kamerasystem 1 erfasst mit seinen Kameras 2A, 2B zwei Einzelbilder 20A, 20B, die jeweils zweidimensionale Bildinformation enthalten und mit einer Ausrichtung mit einem Winkel zueinander in Übereinstimmung mit der Ausrichtung der beiden Kameras 2A, 2B dargestellt werden können, wie in Figur 10 gezeigt. Wie in Figur 11 dargestellt ist, wird eine geometrische Abbildung von der Abbildungsfläche 39 im dreidimensionalen Raum auf die Bildkoordinaten 26 der beiden Kameras 2A, 2B durchgeführt. Die Durchführung der geometrischen Abbildung kann beispielsweise unter Verwendung von Raytraycing erfolgen, wobei prinzipiell auch andere Verfahren verwendet werden können.

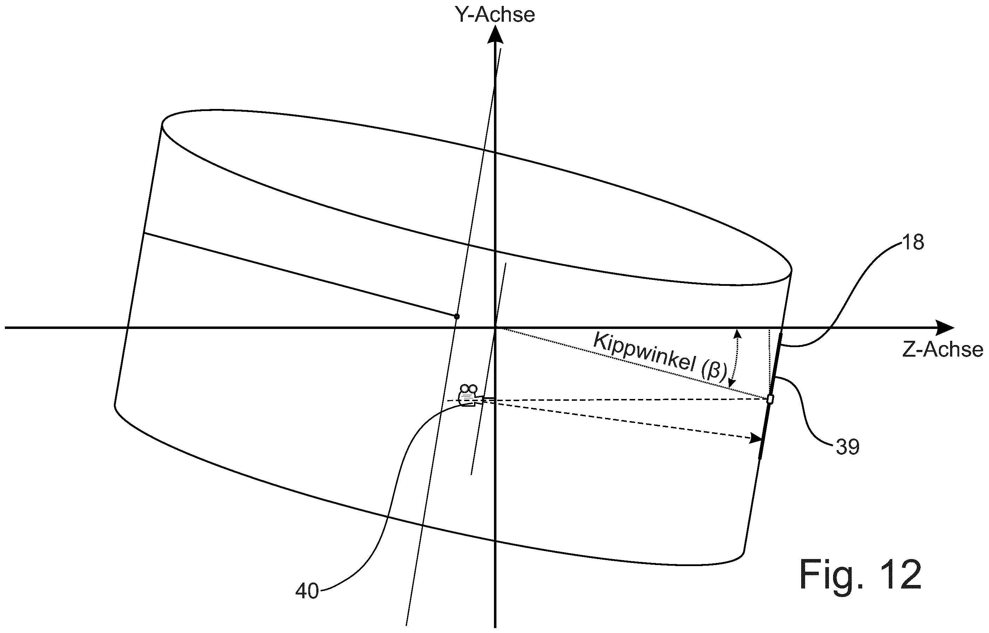

In diesem Ausführungsbeispiel ist die Abbildungsfläche 39 als Zylindermantelfläche ausgeführt. Die geometrische Abbildung von der Abbildungsfläche 39 im dreidimensionalen Raum auf die Bildkoordinaten 26 der beiden Kameras 2A, 2B erfolgt unter Berücksichtigung verschiedener geometrische Parameter der Abbildungsfläche 39, beispielsweise einer Ausrichtung der Abbildungsfläche 39 und einer Positionierung der Abbildungsfläche 39 im dreidimensionalen Raum. In diesem Ausführungsbeispiel mit der Abbildungsfläche 39 als Zylindermantelfläche sind die geometrischen Parameter entsprechende Zylinderparameter wie ein Zylinderradius, ein Zylindermittelpunkt, eine Position bezogen auf die Abbildungsfläche 39 oder eine Winkelausrichtung bezogen auf die Abbildungsfläche 39 im dreidimensionalen Raum. Über die Auswahl der geometrischen Parameter der Abbildungsfläche 39, der Ausrichtung der Abbildungsfläche 39 und der Positionierung der Abbildungsfläche 39 kann eine gewünschte Erfassung der Szene 3 mit der Panoramakarte 18 definiert werden, wie sich beispielhaft aus Figur 12 ergibt. Figur 12 zeigt eine bereits oben erwähnte virtuelle Kamera 40, die ein virtuelles Kamerabild unter Verwendung der Panoramakarte 18, die auf der Abbildungsfläche 39 im dreidimensionalen Raum angeordnet ist, erzeugt.

Das Erzeugen der Panoramakarte 18 der Szene 3 als Matrix von Kartenelementen 27 mit der Abbildungsvorschrift der Kartenelemente 27 auf Bildkoordinaten 26 der beiden Kameras 2A, 2B basierend auf der ermittelten Ausrichtung der Kameras 2A, 2B erfolgt unter zusätzlicher Berücksichtigung der ermittelten Bildkorrekturwerte der beiden Kameras 2A, 2B. Dazu werden die beiden Bildkorrekturkarten 24A, 24B verwendet, die in Schritt S130 erzeugt wurden. Die Bildkorrekturkarten 24A, 24B werden optional für eine Verwendung zu einem späteren Zeitpunkt in einer beliebigen Form zusätzlich zu der Panoramakarte 18 gespeichert, um bei einem Zugriff auf die Rohbilder der beiden Kameras 2A, 2B mit korrigierten Rohbildern arbeiten zu können.

Das Erzeugen der Panoramakarte 18 der Szene 3 erfolgt außerdem unter zusätzlicher Berücksichtigung der ermittelten Panoramakorrekturwerte der Panoramakarte 18, wie in Schritt S140 beschrieben wurde.

Schritt S160 betrifft ein Bestimmen von Metainformation in Bezug auf die Szene 3 und ein Hinzufügen der Metainformation zu der Panoramakarte 18.

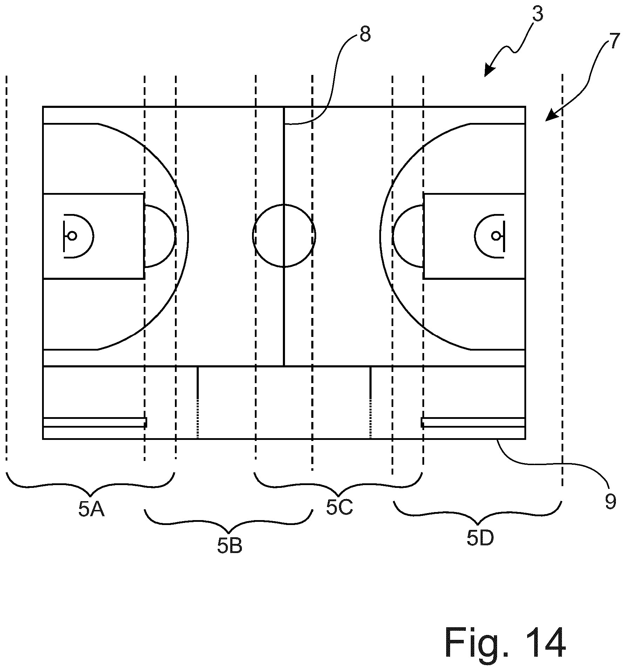

Die Metainformation ist hier eine inhaltliche Information in Bezug auf eine zu dem jeweiligen Kartenelement 27 der Panoramakarte 18 gehörende Position in der Szene 3. Die Metainformation umfasst beispielhaft bei dem Spielfeld 7 innerhalb der Szene 3 aus Figur 1 eine Zuordnung von Kartenelementen 27 zu einem Spielfeldbereich, einem Außenbereich des Spielfelds 7, einem Zuschauerbereich, einem Tor, einer Begrenzungslinie, insbesondere einer Spielfeldbegrenzungslinie wie dem Spielfeldrand 9, der Mittellinie 8 oder auch individuelle Bereiche oder Linien des Spielfelds 7 wie beispielsweise einen Strafraum. Bei anderen Spielfeldern 7, wie beispielsweise dem Spielfeld 7 aus Figur 14, das ein Basketballfeld ist, können die individuellen Bereiche oder Linien ein Korb, eine 3-Punkte-Linie oder ähnliches umfassen. Abhängig von einer Sportart des Spielfelds 7 können die individuellen Bereiche oder Linien ein Netz, einen Torraum oder andere Linien oder Bereiche umfassen. Die Metainformation wird hier automatisch erzeugt, d.h. durch eine künstliche Intelligenz, beispielsweise basierend auf einem neuronalen Netz.

Die Metainformation wird nach der Bestimmung zu der Panoramakarte 18 hinzugefügt, indem sie den Kartenelementen 27 der Panoramakarte 18 individuell zugeordnet wird. Jedes Kartenelement 27 kann dabei verschiedenartige Metainformation gleichzeitig umfassen.

Die Metainformation in Bezug auf die Szene 3 wird in diesem Ausführungsbeispiel basierend auf den beiden Einzelbildern 20A, 20B von den beiden Kameras 2A, 2B bestimmt.

Alternativ erfolgt das Bestimmen von Metainformation in Bezug auf die Szene 3 basierend auf einem erzeugten Panoramabild der Szene 3, das insbesondere basierend auf der Panoramakarte 18 erzeugt wird. Entsprechend kann die Metainformation basierend auf dem Panoramabild als einzelnem Bild für die Panoramakarte 18 bestimmt und zu dieser hinzugefügt werden.

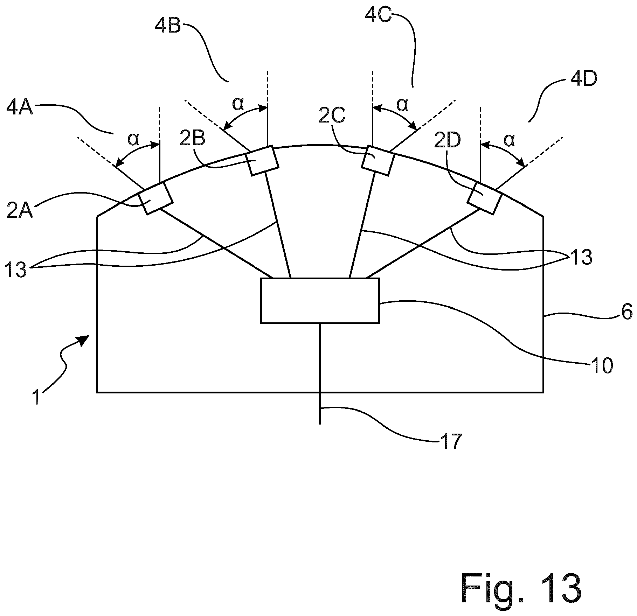

Die Figuren 13 bis 16 betreffen eine zweite, alternative Ausführungsform. Die Kamerasysteme 1 der ersten und zweiten Ausführungsform sind ähnlich aufgebaut, weshalb nachstehend lediglich Unterschiede zwischen den beiden Kamerasystemen 1 im Detail beschrieben werden. Nicht im Detail beschriebene Merkmale des Kamerasystems 1 des zweiten Ausführungsbeispiels entsprechen im Zweifel entsprechend denen des Kamerasystems 1 der ersten Ausführungsform.

Wie sich aus Figur 13 ergibt, umfasst das dort dargestellte Kamerasystem 1 im Gegensatz zu dem Kamerasystem 1 aus Figur 1 vier individuelle Kameras 2A, 2B, 2C, 2D. Auch das Kamerasystem 1 der zweiten Ausführungsform ist ausgeführt zur Erfassung einer Szene 3 mit seinen vier Kameras 2A, 2B, 2B, 2C, wobei jede der Kameras 2A, 2B, 2C, 2D mit ihrem Sichtfeld 4A, 4B, 4C, 4D einen entsprechenden Teilbereich 5A, 5B, 5C, 5D der Szene 3 erfasst. Die obigen Ausführungen in Bezug auf die Kameras 2A, 2B, 2C, 2D gelten entsprechend für das Kamerasystem 1 der zweiten Ausführungsform.

Die Szene 3 stellt auch hier einen mit den vier individuellen Kameras 2A, 2B, 2C, 2D des Kamerasystems 1 zu erfassenden Bereich dar. Die individuellen Kameras 2A, 2B, 2C, 2D sind ausgeführt, Bildinformation in ihren Sichtfeldern 4A, 4B, 4C, 4D zu erzeugen.

Dabei erfasst auch das Kamerasystem 1 der zweiten Ausführungsform die Szene 3 mit seinen vier Kameras 2A, 2B, 2C, 2D basierend auf der Kombination der entsprechenden Sichtfelder 4A, 4B, 4C, 4D vollständig, so dass jeder Teilbereich 5A, 5B, 5C, 5D der Szene 3 von dem Sichtfeld 4A, 4B, 4C, 4D von wenigstens einer der vier Kameras 2A, 2B, 2C, 2D erfasst wird. Die Sichtfelder 4A, 4B, 4C, 4D der vier Kameras 2A, 2B, 2C, 2D sind in diesem Ausführungsbeispiel in einer horizontalen Richtung aneinandergrenzend angeordnet, wobei jeweils benachbarte Sichtfelder 4A, 4B, 4C, 4D teilweise miteinander überlappen.

Zur gemeinsamen Erfassung der Szene 3 sind die vier Kameras 2A, 2B, 2C, 2D gemeinsam an einem Punkt angeordnet, d.h. mit einem geringen Abstand von jeweils wenigen Zentimetern zueinander. Dabei sind die Sichtfelder 4A, 4B, 4C, 4D der Kameras 2A, 2B, 2C, 2D zur Erfassung der Szene 3 unterschiedlich ausgerichtet. Die Kameras 2A, 2B, 2C, 2D sind dabei gemeinsam in einem Gehäuse 6 des Kamerasystems 1 angeordnet und darin fest montiert. Die obigen Ausführungen zur Anbringung und Ausrichtung des Kamerasystems 1 der ersten Ausführungsform gelten entsprechend für das Kamerasystem 1 der zweiten Ausführungsform.

Zusätzlich zu den vier Kameras 2A, 2B, 2C, 2D umfasst auch das Kamerasystem 1 der zweiten Ausführungsform eine Datenverarbeitungseinheit 10, die prinzipiell identisch wie die zuvor in Bezug auf die Datenverarbeitungseinheit 10 des Kamerasystems 1 der ersten Ausführungsform beschriebene Datenverarbeitungseinheit 10 ausgeführt ist. Die Datenverarbeitungseinheit 10 ist hier über individuelle Datenverbindungen 13 nach der Art von Punktzu-Punkt-Verbindungen mit den vier Kameras 2A, 2B, 2C, 2D des Kamerasystems 1 der zweiten Ausführungsform verbunden und empfängt darüber jeweils unverarbeitete Bilder von den vier Kameras 2A, 2B, 2C, 2D.

Auch das Kamerasystem 1 der zweiten Ausführungsform kann als autarke Einheit ausgeführt sein, wie entsprechend oben für das Kamerasystem 1 der ersten Ausführungsform beschrieben wurde.

Auch das Kamerasystem 1 der zweiten Ausführungsform ist ausgeführt, das bereits oben beschriebene Verfahren zur Erzeugung einer Panoramakarte 18 zur Erfassung der Szene 3 entsprechend durchzuführen, wobei das Verfahren vorliegend basierend auf den vier Kameras 2A, 2B, 2C, 2D durchgeführt wird. Die obigen Ausführungen gelten entsprechend.

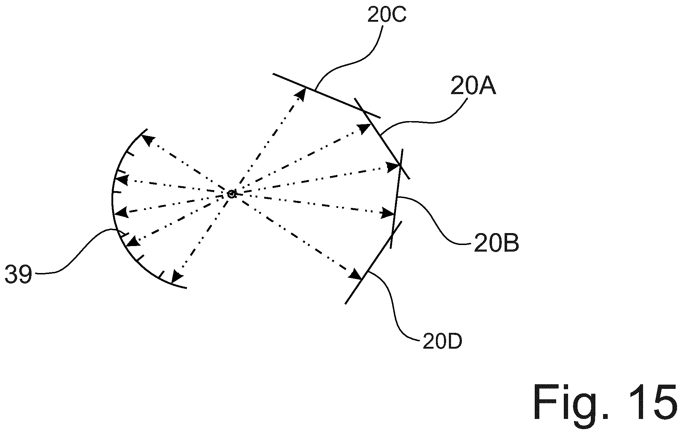

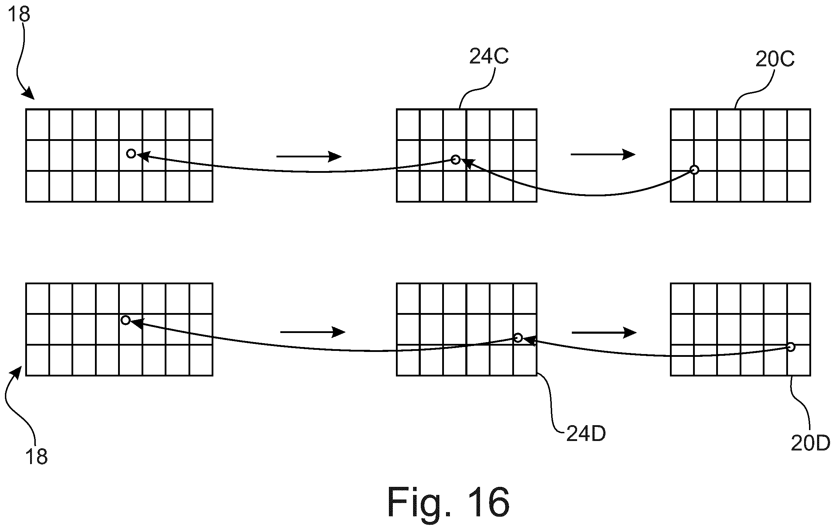

Entsprechend beginnt das Verfahren auch hier mit Schritt S100, wobei hier entsprechende Einzelbilder 20A, 20B, 20C, 20D von jeder der vier Kameras 2A, 2B, 2C, 2D extrahiert werden. Die entsprechenden Einzelbilder 20A, 20B, 20C, 20D sind hier beispielsweise in den Figuren 15 und 16 dargestellt. Die übrigen Ausführungen des oben beschriebenen Verfahrens in Bezug auf das Extrahieren der Einzelbilder 20A, 20B, 20C, 20D gelten entsprechend.

Schritt S110 betrifft auch hier ein Ermitteln von Bildkorrekturwerten für jede der Kameras 2A, 2B, 2C, 2D basierend auf den entsprechenden Einzelbildern 20A, 20B, 20C, 20D. Die übrigen Ausführungen des oben beschriebenen Verfahrens in Bezug auf das Ermitteln von Bildkorrekturwerten für jede der Kameras 2A, 2B, 2C, 2D gelten entsprechend.

Schritt S120 betrifft ein Ermitteln einer Ausrichtung der vier Kameras 2A, 2B, 2C, 2D basierend auf den Einzelbildern 20A, 20B, 20C, 20D.

Die Ausrichtung der vier Kameras 2A, 2B, 2C, 2D wird basierend auf den Einzelbildern 20A, 20B, 20C, 20D von den Kameras 2A, 2B, 2C, 2D, deren Sichtfelder 4A, 4B, 4C, 4D jeweils benachbart angeordnet sind, jeweils paarweise bestimmt. Dadurch ergibt sich im Ergebnis eine kombinierte Ausrichtung der vier Kameras 2A, 2B, 2C, 2D. Auch hier kann die Ausrichtung der Kameras 2A, 2B, 2C, 2D jeweils bezogen auf eine gemeinsame Referenz oder paarweise relativ zueinander ermittelt werden, wodurch alle Kameras 2A, 2B, 2C, 2D eindeutig zueinander definiert sind. Die Ausrichtung der jeweiligen Kameras 2A, 2B, 2C, 2D wird dabei jeweils paarweise über identische Bildinhalte 23 in den Sichtfeldern 4A, 4B, 4C, 4D der entsprechenden Kameras 2A, 2B, 2C, 2D, deren Sichtfelder 4A, 4B, 4C, 4D jeweils paarweise benachbart angeordnet sind, ermittelt.

Die übrigen Ausführungen des oben beschriebenen Verfahrens in Bezug auf das Ermitteln einer Ausrichtung der vier Kameras 2A, 2B, 2C, 2D gelten entsprechend.

Schritt S130 betrifft ein um Erzeugen von Bildkorrekturkarten 24A, 24B, 24C, 24D als Matrix von Kartenelementen 25 für jede der vier Kameras 2A, 2B, 2C, 2D, wobei jede Bildkorrekturkarte 24A, 24B, 24C, 24D eine Korrekturabbildungsvorschrift der Kartenelemente 25 der Bildkorrekturkarte 24A, 24B auf Bildkoordinaten 26 der jeweiligen Kameras 2A, 2B, 2C, 2D basierend auf den entsprechenden ermittelten Bildkorrekturwerten umfasst. Die Korrekturkarten 24A, 24B, 24C, 24D sind in Figur 16 entsprechend dargestellt.

Die übrigen Ausführungen des oben beschriebenen Verfahrens in Bezug auf das Erzeugen von Bildkorrekturkarten 24A, 24B, 24C, 24D gelten entsprechend.

Schritt S140 betrifft ein Ermitteln von Panoramakorrekturwerten für die Panoramakarte 18 basierend auf den Einzelbildern 20A, 20B, 20C, 20D von jeder der Kameras 2A, 2B, 2C, 2D. Die Ausführungen des oben beschriebenen Verfahrens in Bezug auf das Ermitteln von Panoramakorrekturwerten für die Panoramakarte 18 gelten entsprechend.

Schritt S150 betrifft ein Erzeugen der Panoramakarte 18 der Szene 3 als Matrix von Kartenelementen 27 mit einer Abbildungsvorschrift der Kartenelemente 27 auf die Bildkoordinaten 26 der Kameras 2A, 2B, 2C, 2D basierend auf der ermittelten Ausrichtung der Kameras 2A, 2B, 2C, 2D.

Die Panoramakarte 18 gibt an, wie die Bildinformation der vier Kameras 2A, 2B, 2C, 2D die Szene 3 gemeinsam wiedergeben kann.

Die Abbildungsvorschrift der Kartenelemente 27 auf die Bildkoordinaten 26 gibt eine Abbildung jedes Kartenelementes 27 auf wenigstens eine Bildkoordinate 26 von einer der Kameras 2A, 2B, 2C, 2D an, d.h. auf einen frei definierten Koordinatenpunkt, der sich üblicherweise logisch zwischen Bildpunkten der jeweiligen Kamera 2A, 2B, 2C, 2D befinden kann.

Jeweils ein entsprechender Überlappungsbereich 22 befindet sich zwischen den Sichtfeldern 4A, 4B, 4C, 4D der benachbarten Kameras 2A, 2B, 2C, 2D. Die Überlappungsbereiche 22 umfassen dabei jeweils einen Kombinationsbereich 28 und zwei Einzelkamerabereiche 29, wie oben im Detail ausgeführt wurde.

Es können entsprechende Gewichte für einzelne Kartenelemente 27 der Panoramakarte 18 in jedem Kombinationsbereich 28 definiert werden. Dadurch kann Kombinationsregel mit individuellen Gewichtungen für jedes der Kartenelemente 27 in dem Kombinationsbereich 28 angeben werden. Die Abbildungsvorschrift mit kann dabei jeweils mit einer mehrdimensionalen Kombinationsregel basierend auf einer Mehrzahl Bildverarbeitungsebenen 30, 31, 32 für eine Mehrzahl von Frequenzen zur Verwendung im Rahmen eines Mehrfrequenz-Überblendens erzeugt werden.

Das Erzeugen der Panoramakarte 18 der Szene 3 umfasst auch hier eine geometrische Abbildung von einer Abbildungsfläche 39 im dreidimensionalen Raum auf die Bildkoordinaten 26 der vier Kameras 2A, 2B, 2C, 2D.

Die weiteren Ausführungen des oben beschriebenen Verfahrens in Bezug auf das Erzeugen der Panoramakarte 18 der Szene 3 gelten entsprechend.

Schritt S160 betrifft ein Bestimmen von Metainformation in Bezug auf die Szene 3 und ein Hinzufügen der Metainformation zu der Panoramakarte 18.

Die Metainformation in Bezug auf die Szene 3 wird in diesem Ausführungsbeispiel basierend auf den Einzelbildern 20A, 20B, 20C, 20D von den vier Kameras 2A, 2B, 2C, 2D bestimmt. Alternativ erfolgt das Bestimmen von Metainformation in Bezug auf die Szene 3 basierend auf einem erzeugten Panoramabild der Szene 3, wie oben ausgeführt wurde.

Die weiteren Ausführungen des oben beschriebenen Verfahrens in Bezug auf das Bestimmen von Metainformation in Bezug auf die Szene 3 und das Hinzufügen der Metainformation zu der Panoramakarte 18 gelten entsprechend.

### Bezugszeichenliste

- 1: Kamerasystem
- 2A: Kamera
- 2B: Kamera
- 2C: Kamera
- 2D: Kamera
- 3: Szene
- 4A: Sichtfeld
- 4B: Sichtfeld
- 4C: Sichtfeld
- 4D: Sichtfeld
- 5A: Teilbereich
- 5B: Teilbereich
- 5C: Teilbereich
- 5D: Teilbereich
- 6: Gehäuse
- 7: Spielfeld
- 8: Mittellinie
- 9: Spielfeldrand
- 10: Datenverarbeitungseinheit
- 11: Prozessor
- 12: Speicher
- 13: Datenverbindung
- 14: Grafikeinheit
- 15: Grafikprozessor
- 16: Grafikspeicher
- 17: Übertragungsschnittstelle
- 18: Panoramakarte
- 19: Mast
- 20A: Einzelbild
- 20B: Einzelbild
- 20C: Einzelbild
- 20D: Einzelbild
- 21: Haus
- 22: Überlappungsbereich
- 23: Bildinhalt, Hausecke
- 24A: Bildkorrekturkarte
- 24B: Bildkorrekturkarte
- 24C: Bildkorrekturkarte
- 24D: Bildkorrekturkarte
- 25: Kartenelement (Bildkorrekturkarte)
- 26: Bildkoordinate
- 27: Kartenelement (Panoramakarte)
- 28: Kombinationsbereich
- 29: Einzelkamerabereich
- 30: Bildverarbeitungsebene
- 31: Bildverarbeitungsebene
- 32: Bildverarbeitungsebene
- 33: Bildpyramide
- 34: Bildpyramide
- 35: Bildpyramide
- 36: Ebenengewicht
- 37: Ebenengewicht
- 38: Ebenengewicht
- 39: Abbildungsfläche
- 40: virtuelle Kamera

## Patentansprüche

1. Verfahren zur Erzeugung einer Panoramakarte (18) zur Erfassung einer Szene (3) basierend auf einer Mehrzahl individueller Kameras (2A, 2B, 2C, 2D), wobei jede der Kameras (2A, 2B, 2C, 2D) mit ihrem Sichtfeld (4A, 4B, 4C, 4D) zumindest einen Teilbereich (5A, 5B, 5C, 5D) der Szene (3) erfasst und die Kameras (2A, 2B, 2C, 2D) die Szene (3) mit ihren Sichtfeldern (4A, 4B, 4C, 4D) in Kombination vollständig erfassen, umfassend die Schritte
- Extrahieren von wenigstens einem Einzelbild (20A, 20B, 20C, 20D) von jeder der Kameras (2A, 2B, 2C, 2D),
- Ermitteln einer Ausrichtung der Kameras (2A, 2B, 2C, 2D) basierend auf dem wenigstens einen Einzelbild (20A, 20B, 20C, 20D) von jeder der Kameras (2A, 2B, 2C, 2D), und
- Erzeugen der Panoramakarte (18) der Szene (3) als Matrix von Kartenelementen (27) mit einer Abbildungsvorschrift der Kartenelemente (27) auf Bildkoordinaten (26) der Kameras (2A, 2B, 2C, 2D) basierend auf der ermittelten Ausrichtung der Kameras (2A, 2B, 2C, 2D), wobei
das Verfahren **dadurch gekennzeichnet ist, dass**
- das Erzeugen der Panoramakarte (18) der Szene (3) als Matrix von Kartenelementen (27) mit einer Abbildungsvorschrift der Kartenelemente (27) auf Bildkoordinaten (26) der Kameras (2A, 2B, 2C, 2D) basierend auf der ermittelten Ausrichtung der Kameras (2A, 2B, 2C, 2D) innerhalb wenigstens eines Kombinationsbereichs (28) eines Überlappungsbereichs (22) der Sichtfelder (4A, 4B, 4C, 4D) von einer Mehrzahl der Kameras (2A, 2B, 2C, 2D) ein Erzeugen der Abbildungsvorschrift der Kartenelemente (27) auf mit dem Kombinationsbereich (28) korrespondierende Bildkoordinaten (26) von der Mehrzahl der Kameras (2A, 2B, 2C, 2D) umfasst.

2. Verfahren nach Anspruch 1, **dadurch gekennzeichnet, dass**
das Verfahren einen zusätzlichen Schritt zum Ermitteln von Bildkorrekturwerten für jede der Kameras (2A, 2B, 2C, 2D) basierend auf dem wenigstens einem Einzelbild (20A, 20B, 20C, 20D) von jeder der Kameras (2A, 2B, 2C, 2D) umfasst, und
das Erzeugen der Panoramakarte (18) der Szene (3) als Matrix von Kartenelementen (27) mit einer Abbildungsvorschrift der Kartenelemente (27) auf Bildkoordinaten (26) der Kameras (2A, 2B, 2C, 2D) basierend auf der ermittelten Ausrichtung der Kameras (2A, 2B, 2C, 2D) unter zusätzlicher Berücksichtigung der ermittelten Bildkorrekturwerte der jeweiligen Kameras (2A, 2B, 2C, 2D) erfolgt.

3. Verfahren nach Anspruch 2, **dadurch gekennzeichnet, dass**
das Ermitteln von Bildkorrekturwerten wenigstens einen der Schritte umfasst aus
Ermitteln von ersten Bildkorrekturwerten basierend auf intrinsischen Parametern von jeder der Kameras (2A, 2B, 2C, 2D), und
Ermitteln von zweiten Bildkorrekturwerten basierend auf einer Linsenverzerrung von jeder der Kameras (2A, 2B, 2C, 2D).

4. Verfahren nach einem der Ansprüche 2 oder 3, **dadurch gekennzeichnet, dass**
das Verfahren einen zusätzlichen Schritt zum Erzeugen von Bildkorrekturkarten (24A, 24B, 24C, 24D) als Matrix von Kartenelementen (25) für jede der Kameras (2A, 2B, 2C, 2D) umfasst, wobei jede Bildkorrekturkarte (24A, 24B, 24C, 24D) eine Korrekturabbildungsvorschrift der Kartenelemente (25) der Bildkorrekturkarte (24A, 24B, 24C, 24D) auf Bildkoordinaten (26) der entsprechenden Kameras (2A, 2B, 2C, 2D) basierend auf den entsprechenden ermittelten Bildkorrekturwerten umfasst,
wobei vorzugsweise das Erzeugen der Panoramakarte (18) der Szene (3) als Matrix von Kartenelementen (27) mit einer Abbildungsvorschrift der Kartenelemente (27) auf Bildkoordinaten (26) der Kameras (2A, 2B, 2C, 2D) basierend auf der ermittelten Ausrichtung der Kameras (2A, 2B, 2C, 2D) unter Verwendung der Bildkorrekturkarten (24A, 24B, 24C, 24D) erfolgt.

5. Verfahren nach einem der vorhergehenden Ansprüche, **dadurch gekennzeichnet, dass**
das Verfahren einen zusätzlichen Schritt zum Ermitteln von Panoramakorrekturwerten für die Panoramakarte (18) basierend auf dem wenigstens einem Einzelbild (20A, 20B, 20C, 20D) von jeder der Kameras (2A, 2B, 2C, 2D) umfasst, und
das Erzeugen der Panoramakarte (18) der Szene (3) als Matrix von Kartenelementen (27) mit einer Abbildungsvorschrift der Kartenelemente (27) auf Bildkoordinaten (26) der Kameras (2A, 2B, 2C, 2D) unter zusätzlicher Berücksichtigung der ermittelten Panoramakorrekturwerte der Panoramakarte (18) erfolgt.

6. Verfahren nach einem der vorhergehenden Ansprüche, **dadurch gekennzeichnet, dass**
das Ermitteln einer Ausrichtung der Kameras (2A, 2B, 2C, 2D) basierend auf dem wenigstens einen Einzelbild (20A, 20B, 20C, 20D) von jeder der Kameras (2A, 2B, 2C, 2D) ein Ermitteln von Rotationsinformation des wenigstens einen Einzelbildes (20A, 20B, 20C, 20D) von jeder der Kameras (2A, 2B, 2C, 2D) relativ zueinander oder bezogen auf eine gemeinsame Referenz umfasst, und/oder
das Ermitteln einer Ausrichtung der Kameras (2A, 2B, 2C, 2D) basierend auf dem wenigstens einen Einzelbild (20A, 20B, 20C, 20D) von jeder der Kameras (2A, 2B, 2C, 2D) ein Ermitteln von Verschiebungsinformation des wenigstens einen Einzelbildes (20A, 20B, 20C, 20D) von jeder der Kameras (2A, 2B, 2C, 2D) relativ zueinander oder bezogen auf eine gemeinsame Referenz umfasst.

7. Verfahren nach einem der vorhergehenden Ansprüche, **dadurch gekennzeichnet, dass**
das Ermitteln einer Ausrichtung der Kameras (2A, 2B, 2C, 2D) basierend auf dem wenigstens einen Einzelbild (20A, 20B, 20C, 20D) von jeder der Kameras (2A, 2B, 2C, 2D) ein Identifizieren identischer Bildinhalte der Einzelbilder (20A, 20B, 20C, 20D) in Überlappungsbereichen (22) der Sichtfelder (4A, 4B, 4C, 4D) von einer Mehrzahl der Kameras (2A, 2B, 2C, 2D) und ein Ermitteln der Ausrichtung der Kameras (2A, 2B, 2C, 2D) basierend auf einer Anordnung der identischen Bildinhalte (23) der Einzelbilder (20A, 20B, 20C, 20D) in den Überlappungsbereichen (22) der Sichtfelder (4A, 4B, 4C, 4D) von der Mehrzahl der Kameras (2A, 2B, 2C, 2D) umfasst.

8. Verfahren nach einem der vorhergehenden Ansprüche, **dadurch gekennzeichnet, dass**
das Erzeugen der Panoramakarte (18) der Szene (3) als Matrix von Kartenelementen (27) mit einer Abbildungsvorschrift der Kartenelemente (27) auf Bildkoordinaten (26) der Kameras (2A, 2B, 2C, 2D) basierend auf der ermittelten Ausrichtung der Kameras (2A, 2B, 2C, 2D) innerhalb wenigstens eines Einzelkamerabereichs (29) eines Überlappungsbereichs (22) der Sichtfelder (4A, 4B, 4C, 4D) von einer Mehrzahl der Kameras (2A, 2B, 2C, 2D) ein Erzeugen der Abbildungsvorschrift der Kartenelemente (27) auf mit dem wenigstens einen Einzelkamerabereich (29) korrespondierende Bildkoordinaten (26) nur einer Kamera (2A, 2B, 2C, 2D) von der Mehrzahl der Kameras (2A, 2B, 2C, 2D) umfasst.

9. Verfahren nach einem der vorhergehenden Ansprüche, **dadurch gekennzeichnet, dass**
das Erzeugen der Abbildungsvorschrift der Kartenelemente (27) auf mit dem Kombinationsbereich (28) korrespondierende Bildkoordinaten (26) von der Mehrzahl der Kameras (2A, 2B, 2C, 2D) ein Erzeugen der Abbildungsvorschrift mit einer Kombinationsregel zur Abbildung der Kartenelemente (27) auf eine Kombination von Bildkoordinaten (26) von der Mehrzahl der Kameras (2A, 2B, 2C, 2D) in dem Kombinationsbereich (28) umfasst.

10. Verfahren nach Anspruch 9, **dadurch gekennzeichnet, dass**
das Erzeugen der Abbildungsvorschrift mit einer Kombinationsregel zur Abbildung der Kartenelemente (27) auf eine Kombination von Bildkoordinaten (26) von der Mehrzahl der Kameras (2A, 2B, 2C, 2D) in dem Kombinationsbereich (28) ein Erzeugen der Abbildungsvorschrift mit einer mehrdimensionalen Kombinationsregel basierend auf einer Mehrzahl Bildverarbeitungsebenen (30, 31, 32) umfasst, insbesondere für eine Mehrzahl von Frequenzen im Rahmen eines Mehrfrequenz-Überblendens.

11. Verfahren nach einem der vorhergehenden Ansprüche, **dadurch gekennzeichnet, dass**
das Erzeugen der Abbildungsvorschrift der Kartenelemente (27) auf mit dem Überlappungsbereich (28) korrespondierende Bildkoordinaten (26) von der Mehrzahl der Kameras (2A, 2B, 2C, 2D) ein Definieren von wenigstens einem mit dem Kombinationsbereich (28) korrespondierenden Bildbereich im Sichtfeld (4A, 4B, 4C, 4D) von jeder von der Mehrzahl der Kameras (2A, 2B, 2C, 2D) aufweist, insbesondere zur Bestimmung von Überblendungsinformation zum Überblenden zwischen Sichtfeldern (4A, 4B, 4C, 4D) der Mehrzahl der Kameras (2A, 2B, 2C, 2D) im Kombinationsbereich (28), insbesondere zur Bestimmung von Überblendungsinformation basierend auf einer Mehrzahl von Frequenzen im Rahmen eines Mehrfrequenz-Überblendens.

12. Verfahren nach einem der vorhergehenden Ansprüche, **dadurch gekennzeichnet, dass**
das Erzeugen der Panoramakarte (18) der Szene (3) ein Erzeugen der Panoramakarte (18) der Szene (3) als geometrische Abbildung von einer Abbildungsfläche (39) im dreidimensionalen Raum auf Bildkoordinaten (26) der Kameras (2A, 2B, 2C, 2D) umfasst, wobei die Abbildungsfläche (39) vorzugsweise als Zylindermantelfläche ausgeführt ist.

13. Verfahren nach einem der vorhergehenden Ansprüche, **dadurch gekennzeichnet, dass**
das Verfahren einen zusätzlichen Schritt zum Bestimmen von Metainformation in Bezug auf die Szene (3) und zum Hinzufügen der Metainformation zu der Panoramakarte (18) umfasst.

14. Verfahren nach Anspruch 13, **dadurch gekennzeichnet, dass** das Bestimmen von Metainformation in Bezug auf die Szene (3) ein Bestimmen der Metainformation basierend auf dem wenigstens einen Einzelbild (20A, 20B, 20C, 20D) von jeder der Kameras (2A, 2B, 2C, 2D) umfasst, und/oder
das Bestimmen von Metainformation in Bezug auf die Szene (3) ein Erzeugen wenigstens eines Panoramabilds der Szene (3), insbesondere basierend auf der Panoramakarte (18), und ein Bestimmen der Metainformation basierend auf dem wenigstens einen Panoramabild umfasst, und/oder
das Bestimmen von Metainformation in Bezug auf die Szene (3) ein Erzeugen wenigstens eines virtuellen Kamerabilds der Szene (3) basierend auf der Panoramakarte (18) und ein Bestimmen der Metainformation basierend auf dem wenigstens einen virtuellen Kamerabild umfasst.

15. Kamerasystem (1) zur Erfassung einer Szene (3) mit einer Mehrzahl individueller Kameras (2A, 2B, 2C, 2D), wobei jede der Kameras (2A, 2B, 2C, 2D) mit ihrem Sichtfeld (4A, 4B, 4C, 4D) zumindest einen Teilbereich (5A, 5B, 5C, 5D) der Szene (3) erfasst und die Kameras (2A, 2B, 2C, 2D) die Szene (3) mit ihren Sichtfeldern (4A, 4B, 4C, 4D) in Kombination vollständig erfassen,
wobei das Kamerasystem (1) **dadurch gekennzeichnet ist, dass** das Kamerasystem (1) ausgeführt ist, das obige Verfahren durchzuführen.
